(19) Europäisches Patentamt
European Patent Office
Office européen des brevets

(11) Publication number: **0 367 482 B1**

# (12) EUROPEAN PATENT SPECIFICATION

(45) Date of publication of patent specification: **21.09.94**

(51) Int. Cl.5: **C08G 73/10**

(21) Application number: **89310983.5**

(22) Date of filing: **25.10.89**

## (54) Polyimides and process for the preparation thereof.

(30) Priority: **28.10.88 JP 270778/88**
**12.04.89 JP 90674/88**

(43) Date of publication of application:
**09.05.90 Bulletin 90/19**

(45) Publication of the grant of the patent:
**21.09.94 Bulletin 94/38**

(84) Designated Contracting States:
**CH DE FR GB IT LI NL SE**

(56) References cited:
**EP-A- 0 243 507**
**US-A- 4 196 144**

(73) Proprietor: **MITSUI TOATSU CHEMICALS, Inc.**
**2-5 Kasumigaseki 3-chome**
**Chiyoda-Ku Tokyo 100 (JP)**

(72) Inventor: **Tamai, Shoji**
**Iijima-Cho 2882**
**Sakae-Ku**
**Yokohama-Shi (JP)**
Inventor: **Kawashima, Saburo**
**Oyabe 4-37-14**
**Yokosuka-Shi (JP)**
Inventor: **Ohta, Masahiro**
**Yabe-Cho 1541**
**Totsuka-Ku**
**Yokohama-Shi (JP)**
Inventor: **Iiyama, Katsuaki**
**Komonomiya 582-3**
**Odawara-Shi (JP)**
Inventor: **Oikawa, Hideaki**
**Hirado 3-42-7**
**Totsuka-Ku**
**Yokohama-Shi (JP)**
Inventor: **Ohkoshi, Kouji**
**Hisagi 4-10-8**
**Zushi-Shi (JP)**
Inventor: **Yamaguchi, Akihiro**
**Zaimokuza 1-13-24**
**Kamakura-Shi (JP)**

(74) Representative: **Hayward, Denis Edward Peter et al**
**Lloyd Wise, Tregear & Co.**
**Norman House**
**105-109 Strand**
**London WC2R 0AE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 367 482 B1

## Description

The present invention relates to polyimides that exhibit excellent thermal resistance and processability, and to a process for preparing the polyimides.

In specific embodiments the invention relates to a process for preparing crystalline polyimides by controlling the rate of crystallization without varying the substantial crystallinity of the polyimides, to a process for preparing non-crystalline polyimides having outstanding processability and thermal resistance, and to the polyimides prepared by these processes.

Polyimides prepared by reacting tetracarboxylic dianhydride and a diamine compound exhibit excellent mechanical strength, dimensional stability, high thermal resistance, flame retardance and electrical insulation properties. Hence polyimides have conventionally been used in various fields such as electrical and electronic instruments, aerospace and aircraft equipment, and transport machinery. These types of polyimides are useful in applications in which thermal resistance is required. Thus, various types of polyimides having the above characteristics have been developed.

Some of the polyimides, however, do not exhibit definite glass transition temperatures, although they exhibit excellent heat resistance and hence, must be processed by such means as sinter molding to be useful for molding purposes. Other polyimides have low glass transition temperatures and are soluble in halogenated hydrocarbons, although they exhibit excellent processability, and hence are unsatisfactory in view of their relatively low thermal and solvent resistances.

In order to obtain polyimides having the above desired properties, crystalline polyimides have also been developed. For example, polyimides derived from 4,4'-bis(3,4-dicarboxyphenoxy)diphenyl sulfide dianhydride and p-phenylenediamine have a crystal structure(T.L.st clair et al.,J. Polym. Sci., Polym. Chem. ed. 1977, vol. 15, No. 6, p 1529), as do polyimides derived from 3,3',4,4'-benzophenonetetracarboxylic dianhydride and 1,3-bis[4'-(3-aminophenoxy)benzoyl]benzene, which have a semi-crystalline structure(P.M. Hergenrother et al, SAMPE Journal, July/August 1988, p 13).

Although the above crystalline polyimides exhibit superior thermal resistance as compared to non-crystalline polyimide, their crystalline structure causes difficulty in processing and thus their applications are limited.

No process has previously been known which can improve the processability of crystalline polyimides without impairing their essential property, i.e., thermal resistance.

The present inventors previously found that polyimides obtained by condensation of 4,4'-bis(3-aminophenoxy)biphenyl with pyromellitic dianhyride, containing recurring structural units represented by the formula (VI):

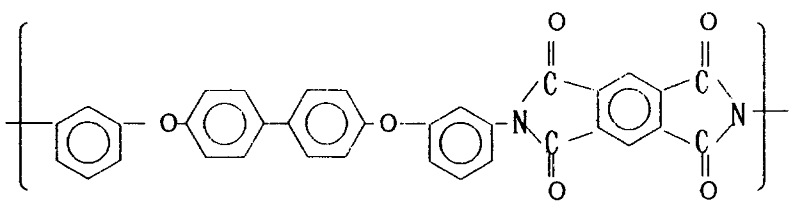

(VI)

have a glass transition temperature (hereinafter referred to as Tg) of 260 °C, a crystallization temperature (hereinafter referred to as Tc) of from 310° to 340°C and a crystalline melting point (hereinafter referred to as Tm) of from 367° to 385 °C, and that such polyimides are crystalline polyimides that can be melt-processed and exhibit excellent chemical resistance [Japanese patent Laid-Open No.62-205124 (USP 4,847,349)].

The polyimide has a much higher Tg of 260 °C as compared with a Tg of 143°C of polyetherether ketone (Trade Mark; VICTREX PEEK, a product of ICI), a crystalline engineering plastic, and a Tg of 225°C of aromatic polysulfone (Trade Mark; VICTREX PES, a product of ICI), a non-crystalline engineering plastic. Consequently, the above polyimide is an excellent engineering plastic material in view of its thermal resistance.

The above polyimide, however, has a high Tm of from 367° to 385 °C and must be molded at a high temperature of about 400°C, which temperature causes processing problems. Further improvement of

processability has been required for the above polyimide .

EP-A-0 243 507 discloses in example 2 a polyimide made from 4,4'-bis(3-aminophenoxy)biphenyl (0.06 mole), 4,4'-diaminodiphenylether (0.14 mode), and pyromellitic anhydride (0.20 mole).

When crystalline resin and non-crystalline resin having the same level of glass transition temperature are compared in view of engineering plastics having high thermal resistance, the crystalline resin is generally excellent in chemical resistance and mechanical properties such as elastic modulus whereas the non-crystalline resin is outstanding in processability. Thus, crystalline resin and non-crystalline resin, respectively, have both advantages and drawbacks.

In consideration of the above circumstances, engineering plastics having good processability, excellent chemical resistance, high elastic modulus and good thermal resistance can be obtained, when the substantially excellent thermal resistance of crystalline polyimides consisting of recurring structural units represented by the above formula (VI) is maintained and processability is improved; for example, when processability is improved under the non-crystalline state in the processing step and then converting to the crystalline state after processing, to obtain polyimides having excellent thermal resistance. The same effect can also be obtained when processability is improved by holding the non-crystalline state during and after processing step and the non-crystalline polyimide thus obtained has high thermal resistance.

It is expected that an essentially crystalline polymer would improve processability and extend utilization of the polyimide to various fields of applications if a method could be developed for freely controlling the crystallization rate of the polymer.

Investigations on the rate of crystallization and the method for controlling the rate have, however, never been carried out on crystalline polyimide.

The present invention overcomes the problems and disadvantages of the prior art by providing polyimides that exhibit excellent thermal resistance and processability.

It is the general object of the invention to provide a polyimide having high thermal resistance and excellent processability.

A specific embodiment of the invention provides a non-crystalline polyimide having excellent processability and high heat resistance.

Other embodiments of this invention provide a process for preparing a crystalline polyimide by favorably and freely controlling the rate of crystallization in the processing of polyimide as a means for utilizing the essential high heat resistance of and improving processability of the above crystalline polyimide.

Thus, in one aspect, the present invention provides a process for preparing a polyimide comprising carring out condensation of 4,4'-bis(3-aminophenoxy)biphenyl of the formula (I):

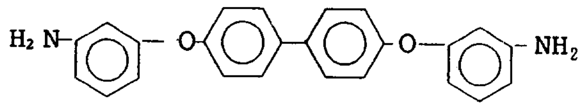

( I )

with a pyromellitic dianhydride of the formula (II):

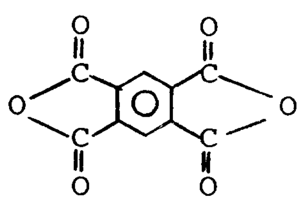

(II)

in the presence of at least one co-reactant selected from the group consisting of a diamine compound represented by the formula (III):

$H_2N - R_1 - NH_2$ (III)

wherein $R_1$ is a divalent group selected from the group consisting of an aliphatic group, an alicyclic group, a monocyclic aromatic group, a fused polycyclic aromatic group and a polycyclic aromatic group wherein the aromatic rings are joined by a member selected from the group consisting of a direct bond and a bridge member, with the proviso that the diamine compound of formula (III) is not the biphenyl compound of

formula (I); and a tetracarboxylic acid dianhydride of the formula (IV):

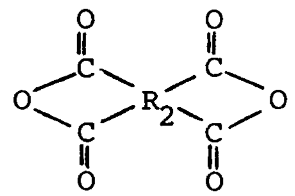

(IV)

wherein $R_2$ is a tetravalent group selected from the group consisting of an aliphatic group, an alicyclic group, a monocyclic aromatic group, a fused polycyclic aromatic group and a polycyclic aromatic group wherein the aromatic rings are joined by a member selected from the group consisting of a direct bond and a bridge member, with the proviso that the dianhydride of formula (IV) is not pyromellitic dianhydride of formula (II); and wherein:

(a) when said at least one co-reactant is selected only from said diamine compounds of formula (III) then said co-reactant is present in amount of from 1-100% by mole per mole of said biphenyl compound of formula (I);

(b) when said at least one co-reactant is selected only from said dianhydride compounds of formula (IV) then said co-reactant is present in amount of from 1-100% by mole per mole of said pyromellitic dianhydride of formula (II); and

(c) when said at least one co-reactant is selected both from said diamine compounds of formula (III) and from said dianhydride compounds of formula (IV) then said co-reactant is present in amount of 1-100% by mole per total mole of said biphenyl compound of formula (I) and said pyromellitic dianhydride of formula (II).

By the process of the invention, the rate of crystallization can be controlled, and processability can be improved without impairing the essential thermal resistance of the polyimide and without an adverse effect on the essential characteristics of the polyimide.

The polyimides prepared by the process of the invention exhibit excellent thermal resistance and processability and are useful in numerous applications such as molded articles and heat resistant films.

Reference will be made hereafter to the accompanying drawings, in which:

Figure 1 illustrates the relationship of crystallinity with time in a Geer oven at 300 °C in Example 10, 11 and Comparative Example 4 .

Figure 2 illustrates the relationship of crystallinity with time in a Geer oven at 300 °C in Examples 10, 12 - 14 and Comparative Example 4 .

Figure 3 illustrates the molding stability of the polyimide obtained in Example 16 and Comparative Example 9.

The molding stability was compared by changing the dwell time of the polyimide in the cylinder of a flow tester at a cylinder temperature of 420 °C and under a pressure of 100 $kg/cm^2$.

Preferred embodiments of the invention will now be described in detail.

In the process of the invention, the diamine compound represented by the formula(III) and/or tetracarboxylic acid dianhydride represented by the formula(IV) are, as already noted, each employed in an amount of from 1 to 100 % by mole of 4,4'-bis(3-aminophenoxy)biphenyl and/or pyromellitic dianhydride. When the diamine compound and/or tetracarboxylic acid dianhydride are each employed in an amount of from 1 to 30 % by mole, the rate of crystallization can be reduced to a desired level corresponding to the amount used and a crystalline polyimide can still be obtained. The polyimide powder thus obtained has improved processability due to its non-crystalline structure and can also be converted to a crystalline structure in the processing step to provide molded articles of polyimide having excellent thermal resistance.

When employed in an amount of from 30 to 100 % by mole, the crystallization rate becomes extremely slow and a polyimide of substantially crystalline structure cannot be formed under usual processing conditions. Consequently, the resulting polyimide has a non-crystalline structure.

The non-crystalline polyimide thus obtained has improved processability and almost no loss is found in the high thermal resistance which is an essential characteristic of crystalline polyimide.

Exemplary suitable diamine compounds of the formula(III), for use in the process of this invention include compounds wherein $R_1$ in the formula(III) is an aliphatic group, such as m-aminobenzylamine, p-aminobenzylamine and ethylenediamine; compounds wherein $R_1$ is an alicyclic group, such as 1,4-diaminocyclohexane; compounds wherein $R_1$ is a monocyclic aromatic group, such as m-phenylenediamine, o-phenylenediamine and p-phenylenediamine; compounds wherein $R_1$ is a fused poly-

cyclic aromatic group, such as 2,6-diaminonaphthalene; compounds wherein $R_1$ is a polycyclic aromatic group in which the aromatic rings are formed by a direct bond, such as 4,4'-diaminobiphenyl; and compounds wherein $R_1$ is a polycyclic aromatic group in which the aromatic rings are formed via a bridge member, such as bis(3-aminophenyl) ether, (3-aminophenyl)(4-aminophenyl) ether, bis(4-aminophenyl) ether, bis(3-aminophenyl) sulfide, (3-aminophenyl)(4-aminophenyl) sulfide, bis(4-aminophenyl) sulfide, bis(3-aminophenyl) sulfoxide, (3-aminophenyl)(4-aminophenyl) sulfoxide, bis(4-aminophenyl) sulfoxide, bis(3-aminophenyl) sulfone, (3-aminophenyl)(4-aminophenyl) sulfone, bis(4-aminophenyl) sulfone, 3,3'-diaminobenzophenone, 3,4'-diaminobenzophenone, 4,4'-diaminobenzophenone, 3,3'-diaminodiphenylmethane, 3,4'-diaminodiphenylmethane, 4,4'-diaminodiphenylmethane, bis[4-(3-aminophenoxy)phenyl]methane, bis[4-(4-aminophenoxy)phenyl]methane, 1,1-bis[4-(3-aminophenoxy)phenyl)ethane, 1,1-bis[4-(4-aminophenoxy)-phenyl]ethane, 1,2-bis[4-(3-aminophenoxy)phenyl]ethane, 1,2-bis[4-(4-aminophenoxy)phenyl]ethane, 2,2-bis-[4-(3-aminophenoxy)phenyl]propane, 2,2-bis[4-(4-aminophenoxy)phenyl]propane, 2,2-bis[4-(3-aminophenoxy)phenyl]butane, 2,2-bis[4-(4-aminophenoxy)phenyl]butane, 2,2-bis[4-(3-aminophenoxy)-phenyl]-1,1,1,3,3,3-hexafluoropropane, 2,2-bis[4-(4-aminophenoxy)phenyl]-1,1,1,3,3,3-hexafluoropropane, 1,3-bis(3-aminophenoxy)benzene, 1,3-bis(4-aminophenoxy)benzene, 1,4-bis(3-aminophenoxy)benzene, 1,4-bis(4-aminophenoxy)benzene, bis[4-(3-aminophenoxy)phenyl]ketone, bis[4-(4-aminophenoxy)phenyl]ketone, bis[4-(3-aminophenoxy)phenyl]sulfide, bis[4-(4-aminophenoxy)phenyl]sulfide, bis[4-(3-aminophenoxy)-phenyl]sulfoxide, bis[4-(4-aminophenoxy)phenyl]sulfoxide, bis[4-(3-aminophenoxy)phenyl]sulfone, bis[4-(4-aminophenoxy)phenyl]sulfone, bis[4-(3-aminophenoxy)phenyl]ether, bis[4-(4-aminophenoxy)phenyl]ether, 1,4-bis[4-(3-aminophenoxy)benzoyl]benzene, 1,3-bis[4-(3-aminophenoxy)benzoyl]benzene, 4,4'-bis[3-(4-aminophenoxy)benzoyl]diphenyl ether, 4,4'-bis[3-(3-aminophenoxy)benzoyl]diphenyl ether, 4,4'-bis[4-(4-amino-$\alpha$ , $\alpha$-dimethylbenzyl)phenoxy]benzophenone, 4,4'-bis[4-(4-amino-$\alpha$ , $\alpha$-dimethylbenzyl)phenoxy]diphenyl sulfone and bis[4-{4-(4-aminophenoxy)phenoxy } phenyl]sulfone. The above compounds may be used singly or in combination. As previously noted, the diamine compound of the formula(I), 4,4'-bis(3-aminophenoxy)biphenyl, cannot be used as a diamine compound of the formula (III).

Among the above diamine compound of the formula(III), the compounds wherein $R_1$ is a polycyclic aromatic group are preferably employed. Exemplary preferred compounds include m-phenylenediamine, p-phenylenediamine, bis(3-aminophenyl) ether, (3-aminophenyl)(4-aminophenyl) ether, bis(4-aminophenyl) ether, 1,3-bis(3-aminophenoxy)benzene, 1,3-bis(4-aminophenoxy)benzene, 1,4-bis(3-aminophenoxy)benzene and 1,4-bis(4-aminophenoxy)benzene. More preferably compounds wherein the bridge member joining the aromatic rings is oxygen is employed, such as bis(4-aminophenyl)ether.

Exemplary suitable tetracarboxylic acid dianhydrides of the formula(IV) for use in the process of this invention include dianhydrides wherein $R_2$ is an aliphatic group, such as ethylenetetracarboxylic dianhydride and butanetetracarboxylic dianhydride; dianhydrides wherein $R_2$ is an alicyclic group, such as cyclopentanetetracarboxylic dianhydride; dianhydrides wherein $R_2$ is a monocyclic aromatic group, such as 1,2,3,4-benzenetetracarboxylic dianhydride ; dianhydrides wherein $R_2$ is a fused polycyclic aromatic group, such as 2,3,6,7-naphthalenetetracarboxylic dianhydride, 1,4,5,8-naphthalenetetracarboxylic dianhydride, 1,2,5,6-naphthalenetetracarboxylic dianhydride, 3,4,9,10-perylenetetracarboxylic dianhydride, 2,3,6,7-anthracenetetracarboxylic dianhydride, and 1,2,7,8-phenanthrenetetracarboxylic dianhydride ; dianhydrides wherein $R_2$ is a polycyclic aromatic group in which the aromatic rings are joined by a direct bond, such as 3,3',4,4'-biphenyltetracarboxylic dianhydride and 2,2',3,3'-biphenyltetracarboxylic dianhydride ; and dianhydrides wherein $R_2$ is a polycyclic aromatic group in which the aromatic rings are formed via a bridge member, such as 3,3',4,4'-benzophenonetetracarboxylic dianhydride, 2,2',3,3'-benzophenonetetracarboxylic dianhydride, 2,2'-bis(3,4-dicarboxyphenyl)propane dianhydride, bis(3,4-dicarboxyphenyl) ether dianhydride, bis(2,3-dicarboxyphenyl) ether dianhydride, bis(3,4-dicarboxyphenyl) sulfone dianhydride, bis(2,3-dicarboxyphenyl) sulfone dianhydride, 2,2-bis(3,4-dicarboxyphenyl)1,1,1,3,3,3-hexafluoropropane dianhydride, 2,2-bis(3,4-dicarboxyphenyl)1,1,1,3,3,3-hexachloropropane dianhydride, 1,1-bis(2,3-dicarboxyphenyl)ethane dianhydride, bis(2,3-dicarboxyphenyl)methane dianhydride, bis(3,4-dicarboxyphenyl)methane dianhydride, 4,4'-(p-phenylenedioxy)diphthalic dianhydride and 4,4'-(m-phenylenedioxy)diphthalic dianhydride. The dianhydride compound may be used singly or in combination. As previously noted, pyromellitic dianhydride of the formula (II) cannot be used as the tetracarboxylic acid dianhydride of formula (III).

Among the above tetracarboxylic acid dianhydride of the formula(IV), the compounds wherein $R_2$ is a polycyclic aromatic group are preferably used. Exemplary preferred compounds include 3,3',4,4'-benzophenonetetracarboxylic dianhydride, 3,3',4,4'-biphenyltetracarboxylic dianhydride, bis(3,4-dicarboxyphenyl)ether dianhydride and 4,4'-(p-phenylenedioxy)diphthalic dianhydride. More preferably, 3,3',4,4'-biphenyltetracarboxylic dianhydride is employed.

The diamine compound of the formula(III) and tetracarboxylic acid dianhydride of the formula(IV) are incorporated into the reaction system as auxiliary materials ie as co-reactants in the process of this

invention. Reaction of the main materials in the presence of these co-reactants forms several kinds of imide units which are derived from the diamine ingredient containing 4,4'-bis(3-aminophenoxy)biphenyl and the diamine compound of the formula(III) and the dianhydride ingredient containing pyromellitic dianhydride and the tetracarboxylic acid dianhydride of the formula (IV). These new types of units are thought to cut in the chain of essential recurring structural units of the formula(VI) derived from the main reactants, i.e., 4,4'-bis-(3-aminophenoxy)biphenyl and pyromellitic dianhydride, and to form a complex polymer chain of polyimide.

It is difficult to identify the structure of these polyimide linkages. In practice, however, crystalline polyimide or non-crystalline polyimide can be obtained by adjusting the amounts of the diamine compound and/or tetracarboxylic acid dianhydride for auxiliary use in the above-mentioned range.

The diamine compound represented by the formula(III) and the tetracarboxylic acid dianhydride represented by the formula(IV) may be used singly or as a mixture in a suitable proportion.

As previously stated, the diamine compound of the formula(III) and/or tetracarboxylic acid dianhydride of the formula(IV) is employed in an amount of from 1 to 100 % by mole of the main monomer, i.e., 4,4'-bis(3-aminophenoxy)biphenyl and/or pyromellitic dianhydride. Use in an amount less than 1 % by mole leads to a rapid rate of crystallization of the polyimide composed of the recurring structural units represented by the formula(VI). The resulting polyimide is rapidly converted to a crystalline polyimide and is unfavorable for improving processability. On the other hand, use in an amount exceeding 100 % by mole results in an adverse effect on the excellent characteristics of the polyimide. Preferably, the diamine compound of the formula(III) and/or the tetracarboxylic acid dianhydride of the formula(IV) is employed in an amount of from 5 to 50 % by mole of 4,4'-bis(3-aminophenoxy)biphenyl and/or pyromellitic dianhydride.

In the case where a crystalline polyimide is to be prepared from bis(4-aminophenoxy)ether, the diamine compound of the formula(III) and/or tetracarboxylic acid dianhydride of the formula(IV) is employed in amount of from 2 to 30 % by mole. When used in an amount of about 30 % by mole or less, the crystallization rate can be controlled to a desired level by selecting the treating conditions and a crystalline polyimide can be prepared. However, in the same range of concentrations, it is also possible to prepare a non-crystalline polyimide and to convert the resultant non-crystalline polyimide to crystalline polyimide under selected processing conditions. In these cases, the amount of the diamine compound of the formula-(III) and/or tetracarboxylic acid dianhydride of the formula(IV) for auxiliary use is about 30 % by mole or less, preferably from about 2 to about 30 % by mole of the main monomer materials, i.e. 4,4'-bis(3-aminophenoxy)biphenyl and/or pyromellitic dianhydride. When an amount exceeding about 30 % by mole is employed, it is difficult to give a substantially crystalline polyimide. The use of an amount in large excess of about 30 % by mole can already provide a non-crystalline polyimide. Consequently, a crystalline polyimide can be arbitrarily obtained at certain temperature at a desired rate of crystallization by selecting the amount of auxiliary monomer in the range of 30 % by mole or less of 4,4'-bis(3-aminophenoxy)biphenyl and/or pyromellitic dianhydride, which means that processability can be improved and molded products having excellent thermal resistance can be simultaneously obtained.

In the process for preparing the polyimide of this invention, polyamic acid is prepared by reacting 4,4'-bis(3-aminophenoxy)biphenyl with pyromellitic dianhydride in the presence of a diamine compound of the formula(III) and/or a tetracarboxylic acid dianhydride of the formula(IV).

No particular restriction is imposed on the method of reaction. However, organic solvents are preferably used for the reaction. Examplary suitable organic solvents include N,N-dimethylformamide, N,N-dimethylacetamide, N,N-diethylacetamide, N,N-dimethylmethoxyacetamide, N-methyl-2-pyrrolidone, 1,3-dimethyl-2-imidazolidinone, N-methylcaprolactam, 1,2-dimethoxyethanebis(2-methoxyethyl)ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethyl sulfoxide, dimethyl sulfone, tetramethylurea, hexamethylphosphoramide, phenol, o-cresol,m-cresol, m-cresylic acid, p-cresol, p-chlorophenol and anisol. These organic solvents may be used singly or in combination.

A reaction temperature of about 250 °C or less is preferably employed, more preferably a temperature of about 50 °C or less is employed. No particular limitation is placed upon the pressure and the reaction can be satisfactorily carried out at atmospheric pressure. Reaction time is different depending upon the solvent and reaction temperature. A reaction time of from about 4 to about 24 hours is usually sufficient.

The polyamic acid thus obtained is further imidized by heating at from about 100 to about 400 °C or chemically imidizing with an imidizing agent such as acetic anhydride, to obtain a polyimide having recurring units corresponding to the polyamic acid.

Alternatively, 4,4'-bis(3-aminophenoxy)biphenyl and pyromellitic dianhydride may be suspended or dissolved in an organic solvent together with a diamine compound of the above formula(III) and/or a tetracarboxylic acid dianhydride of the above formula(IV). Then, the resulting mixture is heated to carry out formation of a polyamic acid precursor and simultaneous imidization. The polyimide can thus be prepared.

The above reactions are in some cases carried out in the presence of a dicarboxylic acid anhydride, especially phthalic anhydride.

Preferably, phthalic anhydride is employed in an amount of from 0.001 to 1.0 mole per mole of the total diamine compounds used as the main and auxiliary materials. If employed in an amount less than 0.001 mole, the phthalic anhydride does not provide thermal resistance of the polyimide at high temperatures, whereas an amount exceeding 1.0 mole lowers the mechanical strengths of the polyimide. Most preferably, the phthalic anhydride is employed in an amount of from 0.001 to 0.5 mole.

The reaction in the presence of phthalic anhydride may be carried out by any of the following methods.

(A) Reacting pyromellitic dianhydride with 4,4'-bis(3-aminophenoxy)biphenyl in the presence of a diamine compound of the formula(III) and/or a tetracarboxylic acid dianhydride of the formula(IV) and successively continuing the reaction after adding phthalic anhydride.

(B) Carrying out the reaction of 4,4'-bis(3-aminophenoxy)biphenyl and an amine compound of the formula(III) with phthalic anhydride and sucessively continuing the reaction after adding pyromellitic dianhydride and, when used, tetracarboxylic acid dianhydride of the formula(IV).

(C) Carrying out the reaction after simultaneously mixing pyromellitic dianhydride, 4,4'-bis(3-aminophenoxy)biphenyl, phthalic anhydride, and the diamine compund of the formula(III) and/or the tetracarboxylic acid dianhydride of the formula(IV).

The polyimide can also be prepared by suspending or dissolving 4,4'-bis(3-aminophenoxy)biphenyl, pyromellitic dianhydride and phthalic anhydride in an organic solvent and sucessively heating to carry out formation of a polyamic acid precursor and simultaneous imidization.

Films or powders of polyimides can be prepared by known methods.

Most preferably, 4,4'-diaminodiphenyl ether is used as the diamine compound of the formula(III).

A part of the diamine compound may be replaced by other diamines without adverse effect on the beneficial properties of the polyimide. Exemplary suitable diamine to be used for the partial replacement have been set forth above.

The 4,4'-diaminodiphenyl ether is preferably employed an amount of from 2 to 30 % by mol per mole of 4,4'-bis(3-aminophenoxy)biphenyl of the formula(I). When employed in an amount less than 2 % by mole, the processability is about the same as that of a polyimide consisting of recurring structural units of the formula(VI), and hence no improvement is observed. On the other hand, when employed in an amount greater than 30 % by mole, thermoplasticity is drastically impaired, which is an essential characteristic of the polyimide consisting of the recurring structural units of the formula(IV).

More preferably, the 4,4'-diaminodiphenyl ether is employed, in an amount of from 5 to 20 % by mole of 4,4'-bis(3-aminophenoxy)biphenyl of the formula(I).

If this embodiment of the invention is carried out in the presence of phthalic anhydride, a part of the phthalic anhydride may be replaced by other dicarboxylic acid anhydrides so long as no adverse effect on the good properties of the polyimide is observed.

Exemplary suitable dicarboxylic anhydride for use in partial replacement include:
2,3-benzophenonedicarboxylic anhydride,
3,4-benzophenonedicarboxylic anhydride,
2,3-dicarboxyphenylphenylether anhydride,
3,4-dicarboxyphenylphenylether anhydride,
2,3-biphenyldicarboxylic anhydride,
3,4-biphenyldicarboxylic anhydride,
2,3-dicarboxyphenylphenylsulfone anhydride,
3,4-dicarboxyphenylphenylsulfone anhydride,
2,3-dicarboxyphenylphenylsulfide anhydride,
3,4-dicarboxyphenylphenylsulfide anhyride,
1,2-naphthalenedicarboxylic anhydride,
2,3-naphthalenedicarboxylic anhydride,
1,8-naphthalenedicarboxylic anhydride,
1,2-anthracenedicarboxylic anhydride,
2,3-anthracenedicarboxylic anhydride and
1,9-anthracenedicarboxylic anhydride.

Preferably, the phthalic anhydride is employed in an amount of from 0.001 to 1.0 mole per mole of the total diamine ingredients, i.e., the sum of 4,4'-bis(3-aminophenoxy)biphenyl of the formula(I) and 4,4'-diaminodiphenyl ether. When used in an amount less than 0.001 mole, improvements in thermal stability at high temperatures can not be achieved, which is the object of this invention. When used in an amount exceeding 1.0 mole, a decrease in mechanical properties of the polyimide results. Most preferably, the

phthalic anhydride is employed in an amount of from 0.01 to 0.5 % by mole.

It is particularly preferred to carry out the above reaction in an organic solvent. Exemplary suitable organic solvents are set forth above. The organic solvent may be used singly or as a mixture.

The reaction may be carried out in the organic solvent by any of the following methods.

(A) Reacting pyromellitic dianhydride with 4,4'-bis(3-aminophenoxy)biphenyl and 4,4'-diaminodiphenyl ether, and successively continuing the reaction after adding phthalic anhydride.

(B) Reacting 4,4'-bis(3-aminophenoxy)biphenyl and 4,4'-diaminodiphenyl ether with phthalic anhydride, and successively continuing the reaction after adding pyromellitic dianhydride.

(C) Simultaneously reacting pyromellitic dianhydride, 4,4'-bis(3-aminophenoxy)biphenyl, 4,4'-diaminodiphenyl ether and phthalic anhydride.

The reaction temperature is preferably about 250 °C or less, more preferably about 50 °C or less. No particular limitation is placed on the reaction pressure and the reaction can be sufficiently carried out at atmospheric pressure. The reaction time differs depending upon the solvent and reaction temperature. A reaction time of from about 4 to about 24 hours is usually satisfactory.

The polyamic acid thus obtained is imidized by heating at from about 100 to about 400 °C or chemically imidized with an imidizing agent such as acetic anhydride to obtain a polyimide having recurring structural units corresponding to the polyamic acid.

The polyimide can also be obtained by suspending or dissolving 4,4'-bis(3-aminophenoxy)biphenyl, pyromellitic dianhydride, 4,4'-diaminodipnenyl ether and phthalic anhydride in an organic solvent and successively heating the resultant mixture to carry out formation of a polyamic acid precursor and simultaneous imidization.

The polyimide of this invention obtained by the above process contains two or more recurring structural units represented by the formula(V) :

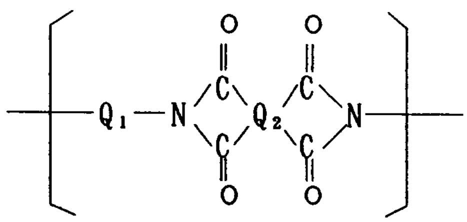

(V)

wherein $Q_1$, and $Q_2$ are groups selected from the group consisting of an aliphatic group, an alicyclic group, a monocyclic aromatic group, a fused polycyclic aromatic group and a polycyclic aromatic group in which the aromatic rings are joined by a direct bond or via a bridge member, $Q_1$ is a divalent group and $Q_2$ is a tetravalent group. The recurring structural units of the formula (V) contain 50 % by mole or more of recurring structural units of the formula(VI) :

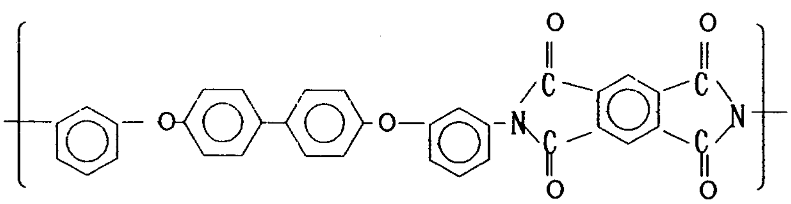

(VI)

and from 0.5 to 50 % by mole of at least one recurring structural unit represented by the formula(VII) and the formula(VIII) and/or the formula (IX) :

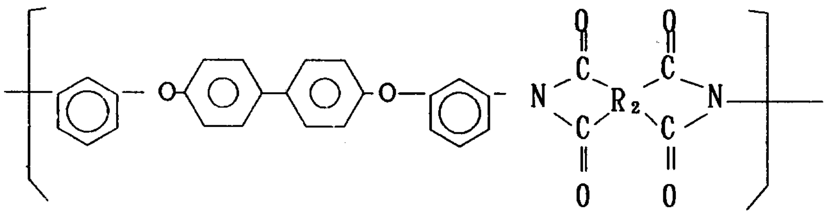

(VII)

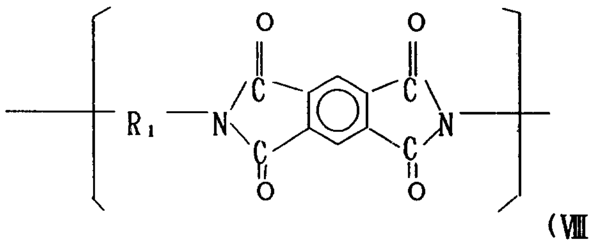

(VIII)

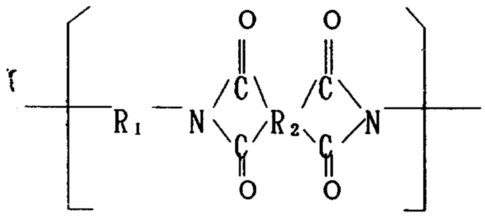

(IX)

wherein $R_1$ and $R_2$ are the same as in the formula(III) and the formula (IV).

When the recurring structural units of the formula(VI) are present in an amount of 50 % by mole or more, and the sum of the recurring structural units of the formula(VII) and the formula(VIII) and/or the formula(IX) is from 0.5 to 50 % by mole, a non-crystalline polyimide is obtained.

When the recurring structural units of the formula(VI) are present in an amount of 85 % by mole or more, and the sum of the recurring structural units of the formula(VII) and the formula(VIII) and/or the formula(IX) is from 0.5 to 15 % by mole, a crystalline polyimide can be obtained by controlling the rate of crystallization.

The exact constitution of the above recurring structural units in the polyimide obtained by the process of this invention cannot be identified as mentioned above. In practice, characteristic polyimide containing the above recurring structural units can be obtained.

Physical properties were measured on several kinds of non-crystalline polyimides obtained by the process of this invention. Ranges of the properties measured were Tg of 255° to 272°C, 5 % weight loss temperature of 539° to 556°C and heat distortion temperature of the molded specimen of 240° to 255°C. On the other hand, crystalline polyimides consisting of the recurring structural units of the formula (VI) exhibited corresponding properties of respectively 260°C, 545°C and 245°C. These results illustrate that these polyimides are almost equal in heat resistance. The non-crystalline polyimides obtained in this invention had a melt viscosity of 10800 to 204000 poises at 380 °C. However, polyimides consisting of the recurring structural units of the formula(VI) did not flow at 380 °C. The polyimide of this invention had a melt flow initiation temperature of 322° to 328 °C, whereas the crystalline polyimide of the formula (VI) had a considerably high initiation temperature of 374 °C. The non-crystalline polyimides of this invention maintain high thermal resistance and have improved processability.

In the melt processing of polyimides obtained by this invention, a suitable amount of other thermoplastic resins may be blended depending upon the object for use, so long as there is no adverse effect on the object of this invention. Exemplary suitable thermoplastic resins include polyethylene, polypropylene, polycarbonate, polyallylate, polyamide, polysulfone, polyether sulfone, polyether ketone, polyphenylene sulfide, polyamideimide, polyetherimide and modified polyphenylene oxide.

Fillers which are used for common resin compositions may be added in an amount which do not cause any adverse effect on the objects of this invention. Exemplary suitable fillers include wear resistance improvers such as graphite, carborundum, silica powder, molybdenum disulfide and fluoro resin ; reinforcing materials such as glass fiber, carbon fiber, boron fiber, silicon carbide fiber, carbon whisker, asbestos, metallic fiber and ceramic fiber ; flame retardance improvers such as antimony trioxide, magnesium

carbonate and calcium carbonate ; electrical property improvers such as clay and mica ; tracking resistance improvers such as asbestos, silica and graphite ; acid resistance improvers such as barium sulfate, silica and calcium metasilicate ; thermal conductivity improvers such as iron powder, zinc powder, aluminum powder and copper powder; and other miscelleneous materials such as glass beads, glass balloon, talc, diatomaceous earth, alumina, silicate balloon, hydrated alumina, metal oxide and colorant.

The present invention provides non-crystalline polyimides having improved processability without decreasing the thermal resistance of an essentially crystalline polyimides, having melt viscosities lower than that of conventionally known polyimide resins, and which have excellent melt flow-stability.

The polyimides of this invention are useful in precision molded products and thermal resistant films as a non-crystalline engineering plastic having outstanding thermal resistance.

The present invention also provides a method for preparating molded articles from non-crystalline to crystalline polyimide base resins by arbitrarily adjusting the rate of crystallization. Hence this invention can provide excellent polyimide resin having remarkably improved processability and thermal resistance, and is an industrially very valuable invention.

The invention will be further clarified by the following examples which are intended to be purely exemplary of the invention.

Properties in the examples and comparative examples were measured by the following methods.

Inherent Viscosity :After dissolving 0.50 g of polyimide powder in 100mℓ of a solvent mixture of p-chlorophenol/phenol (9/1 weight ratio) by heating, the viscosity was measured at 35 °C.

Tg, Tm and Tc : DSC (Shimadsu DT-40 series, DSC 41M) was used for the measurement.

Crystallinity : XRD(Rikadenki RAD-RVC Series, X-ray diffractometer) was used for the measurement.

Heat distortion temperature: ASTM,D-648l was used for the measurement.

Melt Viscosity : Shimadzu KOKA-model Flow Tester, CFT 500A was used under 100 kg load for the measurement.

Melt flow initiation temperature: Shimadzu KOKA-model Flow Tester, CFT 500A was used, and the melt flow initiation temperature was measured under 100 kg load .

5 % Weight-Loss Temperature : Shimadzu DTA-TG was used in air for the measurement.

Example 1

Into a reaction vessel equipped with a stirrer, reflux condenser, water separator and nitrogen inlet tube, 1.9872 kg (5.4 moles) of 4,4'-bis(3-aminophenoxy)biphenyl, 0.12 kg(0.6 mole) of 4,4'-diaminodiphenyl ether, 1.2426 kg (5.7 moles) of pyromellitic dianhydride, 0.0888 kg(0.6 mole) of phthalic anhydride and 13.4 kg of cresylic acid were charged. The mixture obtained was heated to 145 °C with stirring in a nitrogen atmosphere while distilling off 200 cc of water. The reaction was continued for 4 hours at 145 °C. After the reaction mixture was cooled to room temperature, about 7 kg of methyl ethyl ketone were charged and filtered to obtain polyimide as a yellow powder. The polyimide powder was washed with methyl ethyl ketone and dried at 180 °C for 24 hours under reduced pressure to obtain 3.16kg of the product. The yield was 98 %. The polyimide powder had an inherent viscosity of 0.50dℓ/g and a glass transition temperature of 259 °C. Tc and Tm were not observed. Melt viscosity was 14000 poise at 380 °C and 7000 poise at 400 °C.

Comparative Example 1

Into the same reaction vessel as described in Example 1, 2.208 kg (6 moles) of 4,4'-bis(3-aminophenoxy)biphenyl, 1.2426 kg (5.7 moles) of pyromellitic dianhydride, 0.0888 kg(0.6 mole) of phthalic anhydride and 13.4 kg of cresylic acid were charged. The same procedures as described in Example 1 were carried out and 3.27 kg of polyimide were obtained as yellow powder. The yield was 98.5 %. The polyimide powder obtained had an inherent viscosity of 0.50 dℓ/g, a Tg of 260 °C, a Tc of 332 °C and a Tm of 384 °C. The polyimide had a melt viscosity of 7500 poise at 400 °C and did not flow at all at 380 °C .

Example 2

Into the same reaction vessel as described in Example 1, 2.208 kg (6 moles) of 4,4'-bis(3-aminophenoxy)biphenyl, 1.1183 kg (5.13 moles) of pyromellitic dianhydride, 0.1676 kg (0.57 mole) of 3,3',4,4'-biphenyltetracarboxylic dianhydride, 0.0888 kg (0.6 mole) of phthalic anhydride and 13.4 kg of cresylic acid were charged. The same procedures as described in Example 1 were carried out and 3.3 kg of yellow polyimide powder were obtained. The yield was 98 %. The polyimide powder had an inherent

viscosity of 0.48dℓ/g and a Tg of 255 °C. Tc and Tm were not observed. The melt viscosity was 16000 poise at 380°C.

Example 3

Into the same reaction vessel as described in Example 1, 3.312 kg (9 moles) of 4,4'-bis(3-aminophenoxy)biphenyl, 0.2 kg (1 mole) of 4,4'-diaminodiphenyl ether and 17.58 kg of N,N-dimethylacetamide were charged. To the solution obtained, 2.126 kg (9.75 moles) of pyromellitic dianhydride were added by portions in a nitrogen atmosphere at room temperature with caution to inhibit temperature rise of the solution. The resulting mixture was stirred for about 20 hours at room temperature. A part of the polyamide acid solution thus obtained was cast on a glass plate and heated for each for 1 hour at 100°C, 200°C and 300°C to obtain a transparent light yellow polyimide film having a thickness of 25 µm.
The polyimide film had a tensile strength of 16.5 kg/mm$^2$, elongation of 80 % in accordance with ASTM D-882, and 5 % weight loss temperature of 550°C by DTA-TG.

Examples 4 to 9 and Comparative Example 2,3

The same reaction vessel as described in Example 1 and the procedures of Example 1 were repeated except that the diamines employed the amounts thereof were changed as illustrated in Table 1. The results are summarized in Table 1.

Tg, 5 % weight loss temperature, melt viscosity, melt flow initiation temperature and heat distortion temperature of molded specimen are summarized in Table 2 for Examples 1,2,4 to 9 and Comparative Examples 1 and 2.

Example 10

Into the same reaction vessel as described in Example 1, 3.312 kg (9.0 moles) of 4,4'-bis(3-aminophenoxy)biphenyl, 0.2 kg

Table 1

| Example or Comparative Example | Tetracarboxylic acid dianhydride kg(mole) | Diamine ingredient | | Yield (%) | Inherent viscosity (η) (dℓ/g) | Tg (°C) | Tc (°C) | Tm (°C) | Melt viscosity (poise/380°C) |
|---|---|---|---|---|---|---|---|---|---|
| | | 4,4'-bis(3-aminophenoxy)biphenyl kg(mole) | Auxiliary diamine kg(mole) | | | | | | |
| Ex. 4 | Pyromellitic dianhydride 1.2496(5.7) | 1.9872 (5.4) | 3,4'-diaminodiphenyl ether 0.12 (0.6) | 98 | 0.481 | 260 | No | No | 10800 |
| Ex. 5 | ↑ | ↑ | 3,3'-diaminodiphenyl ether 0.12 (0.6) | 98 | 0.478 | 258 | ↑ | ↑ | 11600 |
| Ex. 6 | ↑ | 1.5456 (4.2) | 4,4'-diaminodiphenyl ether 0.36 (1.8) | 98.5 | 0.534 | 260 | ↑ | ↑ | 204000 |
| Comp. Ex. 3 | ↑ | 0.8832 (2.4) | 4,4'-diaminodiphenyl ether 0.72 (3.6) | gelation | Impossible to measure | | | | |
| Ex. 7 | ↑ | 1.9872 (5.4) | bis[4- {4-(4-aminophenoxy) phenoxy]} phenyl]sulfon 0.3696(0.6) | 97.5 | 0.508 | 258 | No | No | 10800 |
| Ex. 8 | ↑ | 1.104 (3.0) | 4,4'-bis[4-(4-amino-α, α-dimethylbenzyl)phenoxy]diphe-nyl sulfon 1.336(3.0) | 97 | 0.538 | 272 | ↑ | ↑ | 40000 |
| Ex. 9 | ↑ | 1.9872 (5.4) | 4,4'-bis[4-(4-amino-α, α-dimethylbenzyl)phenoxy]diphe-nyl sulfon 0.4008(0.6) | 97 | 0.510 | 259 | ↑ | ↑ | 12300 |
| Comp. Ex. 2 | Pyromellitic dianhydride 1.2426(5.7) | 2.1896 (5.95) | 4,4'-diaminodiphenyl ether 0.010 (0.05) | 98 | 0.481 | 260 | 332 | 384 | No flow |

Table 2

| Example or Comparative Example | Tg (°C) | 5% weight loss temperature (°C) | Heat distortion temperature (°C) | Melt viscosity (poise/380 °C) | Melt initiation temperature ( °C) |
|---|---|---|---|---|---|
| Ex. 1 | 259 | 555 | 244 | 14000 | 327 |
| Ex. 2 | 255 | 553 | 240 | 16000 | 322 |
| Ex. 4 | 260 | 556 | 245 | 10800 | 326 |
| Ex. 5 | 258 | 550 | 243 | 11600 | 325 |
| Ex. 6 | 260 | 549 | 244 | 204000 | 328 |
| Ex. 7 | 258 | 546 | 243 | 10800 | 324 |
| Ex. 8 | 272 | 539 | 255 | 40000 | 335 |
| Ex. 9 | 259 | 540 | 244 | 12300 | 324 |
| Comp. Ex. 1 | 260 | 545 | 245 | No flow | 374 |
| Comp. Ex. 2 | 260 | 546 | 246 | ↑ | 372 |

(1.0 mole) of 4,4'-diaminodiphenyl ether, 2.071 kg (9.5 moles) of pyromelltic dianhydride, 0.148 kg (1.0 mole) of phthalic anhydride and 21.58 kg of cresylic acid were charged. The mixture was heated to 145°C with stirring in a nitrogen atmosphere while distilling out about 350 cc of water. The reaction was continued for 4 hours at 145°C. After the reaction mixture was cooled to room temperature, 10.8 kg of methyl ethyl ketone were charged and filtered. The yellow polyimide powder obtained was washed with methyl ethyl ketone and dried at 180°C for 24 hours. The amount obtained was 5.26 kg (98 % yield). The polyimide powder had an inherent viscosity of 0.50 dℓ/g and a glass transition temperature (Tg) of 258°C. The polyimide powder was extruded at 400°C with a Takayasu model extruder having a diameter of 25 mm to obtain red brown transparent pellets. The pellets were further extruded to obtain a red brown transparent flexible film having a width of 50 mm and a thickness of 100 µm.

The rate of crystallization was measured on the polyimide film thus obtained by changing the standing time in a Geer oven at 300 °C. The results are illustrated in Figure 1. No crystallization was found at all until a standing time of 100 minutes in the Geer oven and 25 % crystallinity was observed after 400 minutes.

Comparative Example 4

Into the same reaction vessel as described in Example 1, 3.680 kg (10 moles) of 4,4'-bis(3-aminophenoxy)biphenyl, 2.071 kg (9.5 moles) of pyromellitic dianhydride, 0.148 kg (1.0 mole) of phthalic anhydride and 21.53 kg of cresylic acid were charged. The same procedures as described in Example 1 were carried out to obtain 5.46 kg of yellow polyimide powder. The yield was 98.5 %. The polyimide powder had an inherent viscosity of 0.50dℓ/g. An extruded film was prepared from the polyimide powder by the same procedures as described in Example 10 and the rate of crystallization was measured. Results are illustrated in Figure 2.

Crystallization was initiated after standing for about 5 minutes in the Geer oven at 300 °C and 25 % crystallinity was observed after 30 minutes.

Example 11

Into the same reaction vessel as described in Example 1 , 3.680 kg (10 moles) of 4,4'-bis(3-aminophenoxy)biphenyl, 1.864 kg (8.55 moles) of pyromellitic dianhydride, 0.279 kg (0.95 mole) of 3,3',4,4'-biphenyltetracarboxylic dianhydride, 0.148 kg (1.0 mole) of phthalic anhydride and 21.5 kg of cresylic acid were charged.
The same procedures as described in Example 1 were carried out to obtain 5.51 kg of yellow polyimide powder. The yield was 98.2 %. The polyimide powder had an inherent viscosity of 0.48dℓ/g.
An extruded film was prepared from the polyimide powder by the same procedures as described in

Example 10 and the rate of crystallization was measured.

The results are illustrated in Figure 1. Crystallization was not observed at all until 180 minutes after standing in the Geer oven at 300 °C and 25 % crystallinity was observed after 500 minutes.

Examples 12 to 14 and Comparative Example 5

The same reaction vessel as described in Example 1 was used and the procedures of Example 1 were repeated except that the amount of 4,4'-diaminodiphenyl ether was varied. The results are summarized in Table 3 and Figure 2.

As understood from Table 3 and Figure 2, addition of 4,4'-diaminodiphenyl ether in an amount of 25 % by mol or less of 4,4'-bis(3-aminophenoxy)biphenyl can control the rate of crystallization. The control range is from 5 to 90 minutes in the initiation time of crystallization and from 30 to 3000 minutes in the time required for providing 25% crystallinity. Thus polyimides having a different rate of crystallization can be arbitrarily prepared.

Example 15

The same reaction vessel as described in Example 1 was charged with 3.312 kg (9 moles) of 4,4'-bis(3-aminophenoxy)biphenyl, 0.2 kg (1.0 mole) of 4,4'-diaminodiphenyl ether and 31.6kg of N-methyl-2-pyrrolidone. To the mixture obtained, 2.071 kg (9.5 moles) of pyromellitic dianhydride were added by portions at room temperature in a nitrogen atmosphere with caution to inhibit the temperature rise of the solution. Stirring was continued for 20 hours at room temperature. To the resulting polyamic acid solution, 0.444 kg (3 moles) of phthalic anhydride were added at room temperature in a nitrogen atmosphere and stirred for an additional hour. Successively 0.14 kg of γ-picoline and 0.408 kg (4 moles) of acetic anhydride were added dropwise to the solution. Yellow polyimide powder started to precipitate after an hour of completing addition of the dropwise addition. After stirring further for 10 hours at room temperature,

Table 3

| Example or Comparative Example | Diamine ingredient: Diamine A *1 kg(mole) | Diamine ingredient: Diamine B *2 kg(mole) | Diamine ingredient: (Diamine B/ Diamine A)x100 mole(%) | Tetracarboxylic acid dianhydride kg(mole) | yield (%) | Inherent viscosity (dℓ/g) | Tg (°C) | Crystallization rate of extrude film: Initiation time (min/300 °C) | Crystallization rate of extrude film: Time to 25% crystallinity (min/300°C) |
|---|---|---|---|---|---|---|---|---|---|
| Ex. 10 | 3.312 (9.0) | 0.200 (1.0) | 11.1 | PMDA *3 2.71(9.5) | 98.0 | 0.50 | 258 | 100 | 400 |
| Ex. 12 | 3.496 (9.5) | 0.100 (0.5) | 5.3 | ↑ | 98.5 | 0.51 | 258 | 50 | 100 |
| Ex. 13 | 3.202 (8.7) | 0.260 (1.3) | 14.9 | ↑ | 98.0 | 0.51 | 261 | 450 | 1000 |
| Ex. 14 | 2.944 (8.0) | 0.400 (2.0) | 25.0 | ↑ | 98.5 | 0.52 | 260 | 900 | 3000 |
| Comp.Ex.4 | 3.680 (10.0) | 0 | 0 | ↑ | 98.5 | 0.50 | 260 | 5 | 30 |
| Comp.Ex.5 | 2.576 (7.0) | 0.600 (3.0) | 43.0 | ↑ | 98.5 | 0.53 | 260 | Do not crysyallize after 5000min. | |

Note: *1 : 4,4'-Bis(3-aminophenoxy)biphenyl
*2 : 4,4'-Diaminodiphenyl ether
*3 : Pyromellitic dianhydride

the reaction mixture was filtered, washed by dispersing in methyl ethyl ketone, filtered again and dried at 180 °C for 24 hours. Polyimide powder thus obtained was 5.26 kg. The yield was 98 %. The polyimide powder had a Tg of 258 °C, an inherent viscosity of 0.50 dℓ/g and a melt viscosity of 7000 poise at 400 °C.

Example 16

Into the same reaction vessel as described in Example 1. 1.9872 kg (5.4 moles) of 4,4'-bis(3-aminophenoxy)biphenyl, 0.12 kg (0.6 mole) of 4,4'-diaminophenyl ether, 1.2426 kg (5.7 moles) of pyromellitic dianhydride, 0.0888 kg (0.6 mole) of phthalic anhydride and 13.4 kg of cresylic acid were charged. The mixture were heated to 145 °C with stirring in a nitrogen atmosphere while 200cc of water were distilled out. The reaction was further continued for 4 hours at 145°C. After cooling the reaction mixture to room temperature, about 7 kg of methyl ethyl ketone were added to the mixture and filtered. The resulting yellow powder was washed with methyl ethyl ketone and dried at 180°C for 24 hours under reduced pressure to obtain 3.16 kg of polyimide powder. The yield was 98 %.
The polyimide had an inherent viscosity of 0.50 dℓ/g, a Tg of 259°C, and a melt viscosity of 14000 poise at 380°C and 7000 poise at 400°C. Tc and Tm was not observed.

Molding stability of polyimide thus obtained was measured by varying residence time in the cylinder of the flow tester at 420 °C under pressure of 100 kg/cm$^2$. Results are illustrated in Figure 3. Longer residence time in the cylinder has almost no effect on melt viscosity, which fact indicates good thermal stability.

Comparative Example 6

Into the same reaction vessel as described in Example 1, 2.208 kg (6 moles) of 4,4'-bis(3-aminophenoxy)biphenyl, 1.2426 kg (5.7 moles) of pyromellitic dianhydride, 0.0888 kg (0.6 mole) of phthalic anhydride and 13.4kg of cresylic acid were charged. The same procedures as described in Example 1 were carried out to obtain 3.27 kg of yellow polyimide powder. The yield was 98.5 %. The polyimide powder had an inherent viscosity of 0.50dℓ/g, a Tg of 260 °C, a Tc of 332 °C and a melt viscoity of 7500 poise at 400 °C. The polyimide powder exhibited no melt flow at 380°C.

Examples 17 to 20 and Comparative Example 7 and 8

The same reaction vessel as described in Example 1 was used, and the procedures of Example 15 were repeated except that the amount of 4,4'-diaminodiphenyl ether was varied as illustrated in Table 4. The results are summarized in Table 4.

Comparative Example 9

The same procedures as described in Example 16 were carried out without using phthalic anhydride to obtain yellow polyimide powder. The polyimide powder had a Tg of 260 °C and an inherent viscosity of 0.50 dℓ/g.

Melt viscosity of the polyimide powder was measured by varying the residence time in the cylinder of the flow tester as carried out in Example 16. Results are illustrated in Figure 3. Longer residence time led to higher viscosity. Thus thermal

Table 4

| Example or Comparative Example | Diamine ingredient | | | Phthalic anhydride ingredient | | Yield (%) | Inherent viscosity (dℓ/g) | Tg (℃) | 5% Weight loss temperature (℃) | Melt viscosity (poise/380℃) |
|---|---|---|---|---|---|---|---|---|---|---|
| | Diamine A *1 kg(mole) | Diamine B *2 kg(mole) | (Diamine B / Diamine A) x100 (mole %) | Amount kg(mole) | Phthalic anhydride /Diamine(A+B) (mole ratio) | | | | | |
| Ex.15 | 3.3120 (9.0) | 0.200 (1.0) | 11.1 | 0.444 (0.6) | 0.3 | 98.0 | 0.50 | 258 | 548 | 14000 |
| Ex.16 | 1.9872 (5.4) | 0.120 (0.6) | 11.1 | 0.0888 (0.6) | 0.1 | 98.0 | 0.50 | 259 | 555 | 14000 |
| Ex.17 | 2.0976 (5.7) | 0.060 (0.3) | 5.3 | ↑ | ↑ | 98.0 | 0.51 | 258 | 550 | 19000 |
| Ex.18 | 2.0424 (5.55) | 0.900 (0.45) | 8.1 | ↑ | ↑ | 97.5 | 0.50 | 260 | 552 | 15800 |
| Ex.19 | 1.9320 (5.25) | 0.150 (0.75) | 14.3 | ↑ | ↑ | 98.0 | 0.51 | 262 | 551 | 19300 |
| Ex.20 | 1.8768 (5.10) | 0.180 (0.9) | 17.6 | ↑ | ↑ | 98.5 | 0.52 | 262 | 549 | 22300 |
| Comp.Ex.8 | 1.5456 (4.2) | 0.360 (1.8) | 42.9 | ↑ | ↑ | 98.5 | 0.53 | 260 | 549 | 204000 |
| Comp.Ex.6 | 2.2080 (6) | 0 | 0 | ↑ | ↑ | 98.5 | 0.50 | 260 | 545 | No flow |
| Comp.Ex.7 | 2.1896 (5.95) | 0.010 (0.05) | 0.84 | ↑ | ↑ | 98.0 | 0.48 | 260 | 550 | No flow |

stability of the polyimide was inferior to that of Example 16.

Example 21

The same reaction vessel as described in Example 1 was charged with 1.9872 kg (5.4 moles) of 4,4'-bis(3-aminophenoxy)biphenyl, 0.120 kg (0.6 mole) of bis(4-aminophenoxy) ether, 1.1183 kg (5.13 moles) of pyromellitic dianhydride, 0.1676 kg (0.57 mole) of 3,3',4,4'-biphenyltetracarboxylic dianhydride and 13.4 kg of cresylic acid. The mixture was heated to 145 °C with stirring in a nitrogen atmosphere while 200cc of water were distilled out. The reaction was further continued for 4 days at 145 °C. After cooling the reaction mixture to room temperature, about 7 kg of methyl ethyl ketone were charged and filtered. The resulting yellow-powder was washed with methyl ethyl ketone and dried at 180 °C for 24 hours under reduced pressure. The polyimide powder obtained was 3.184 kg. The yield was 97.5 %. The polyimide powder had an inherent viscosity of 0.49dℓ/g, a Tg of 255 °C and a melt viscosity of 10000 poise at 380 °C. Tc and Tm were not observed.

**Claims**

**1.** A process for preparing a polyimide comprising carrying out condensation of 4,4'-bis(3-aminophenoxy)-biphenyl of the formula (I):

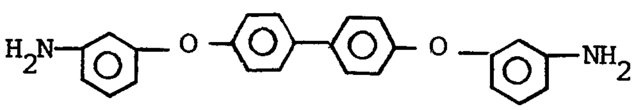

(I)

with a pyromellitic dianhydride of the formula (II):

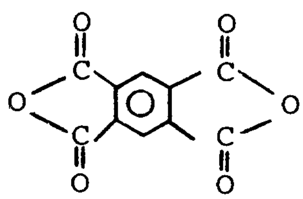

(II)

in the presence of at least one co-reactant selected from the group consisting of a diamine compound represented by the formula (III):

$H_2N - R_1 - NH_2$ (III)

wherein $R_1$ is a divalent group selected from the group consisting of an aliphatic group, an alicyclic group, a monocyclic aromatic group, a fused polycyclic aromatic group and a polycyclic aromatic group wherein the aromatic rings are joined by a member selected from the group consisting of a direct bond and a bridge member, with the proviso that the diamine compound of formula (III) is not the biphenyl compound of formula (I); and a tetracarboxylic acid dianhydride of the formula (IV):

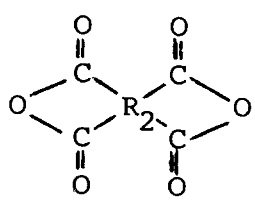

(IV)

wherein $R_2$ is a tetravalent group selected from the group consisting of an aliphatic group, an alicyclic group, a monocyclic aromatic group, a fused polycyclic aromatic group and a polycyclic aromatic group wherein the aromatic rings are joined by a member selected from the group consisting of a direct bond and a bridge member, with the proviso that the dianhydride of formula (IV) is not pyromellitic dianhydride of formula (II); and wherein:

(a) when said at least one co-reactant is selected only from said diamine compounds of formula (III) then said co-reactant is present in amount of from 1-100% by mole per mole of said biphenyl compound of formula (I);

(b) when said at least one co-reactant is selected only from said dianhydride compounds of formula (IV) then said co-reactant is present in amount of from 1-100% by mole per mole of said pyromellitic dianhydride of formula (II); and

(c) when said at least one co-reactant is selected both from said diamine compounds of formula (III) and from said dianhydride compounds of formula (IV) then said co-reactant is present in amount of 1-100% by mole per total mole of said biphenyl compound of formula (I) and said pyromellitic dianhydride of formula (II).

**2.** A process according to Claim 1, wherein said condensation is carried out so as to form a non-crystalline polyimide.

**3.** A process according to Claim 1, wherein said mole percentages of co-reactant are, in each case, from 1 to 30 % by mole of co-reactant per mole of said 4,4'-bis(3-aminophenoxy)biphenyl of formula (I) and/or said pyromellitic dianhydride of formula (II); and wherein said condensation is carried out to form a crystalline polyimide.

**4.** A process according to any preceding claim, wherein said diamine compound of formula (III) is a compound wherein $R_1$ is a polycyclic aromatic group in which the aromatic rings are joined by a member selected from the group consisting of a direct bond and a bridge member.

**5.** A process according to Claim 4, wherein said diamine compound of formula (III) is bis(4-aminophenyl)-ether.

**6.** A process according to any preceding claim, wherein said tetracarboxylic acid dianhydride of formula (IV) is a compound wherein $R_2$ is a polycyclic aromatic group in which the aromatic rings are joined by a member selected from the group consisting of a direct bond and a bridge member.

**7.** A process according to Claim 6, wherein said tetracarboxylic acid dianhydride of formula (IV) is 3,3',4,4'-biphenyltetracarboxylic anhydride.

**8.** A process according to Claim 2, wherein said diamine of formula (III) is bis(4-aminophenyl)ether, and wherein at least one of said diamine compound of formula (III) and said tetracarboxylic acid dianhydride of the formula (IV) is present in an amount of from 2% to 30% by mole of at least one of said 4,4-bis(3-aminophenoxy)biphenyl and said pyromellitic dianhydride.

**9.** A process according to any preceding claim, further comprising a dicarboxylic acid anhydride.

**10.** A process according to Claim 9, wherein said dicarboxylic acid anhydride is present in an amount of from 0.001 to 1.0 mole per total moles of said 4,4-bis(3-aminophenoxy)biphenyl of formula (I) and said diamine compound of formula (III).

**11.** A process according to Claim 9 or Claim 10, wherein said dicarboxylic acid anhydride is phthalic anhydride.

**12.** A polyimide prepared by a process according to any preceding claim.

**13.** A polyimide having two or more of recurring structural units represented by the formula (V):

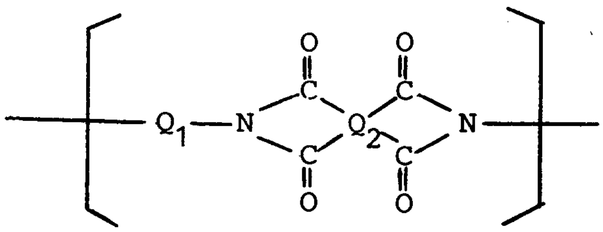

(V)

wherein $Q_1$ and $Q_2$ are each groups selected from the group consisting of an aliphatic group, an alicyclic group, a monocyclic aromatic group, a fused polycyclic aromatic group and a polycyclic aromatic group and a polycyclic aromatic group wherein the aromatic groups are joined by a member selected from the group consisting of a direct bond and a bridge member, $Q_1$ is a divalent group and $Q_2$ is a tetravalent group; said recurring structural units of the formula (V) comprising 50% by mole or more of recurring structural units having the formula (VI):

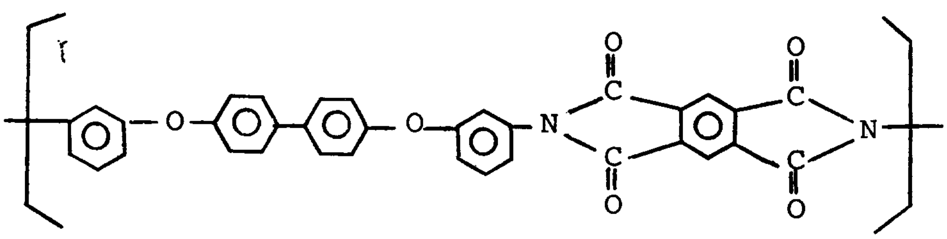

(VI)

and from 0.5 to 50% by mole of at least one recurring structural unit selected from the group of recurring structural units of the formula (VII), formula (VIII) and the formula (IX):

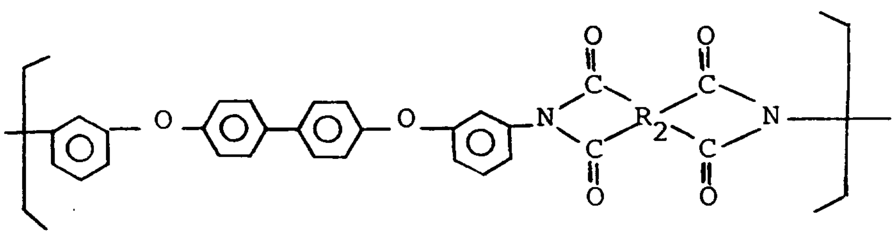

(VII)

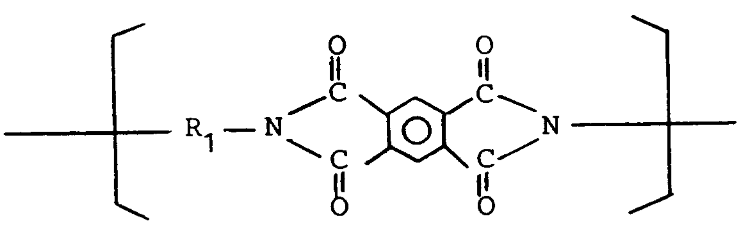

(VIII)

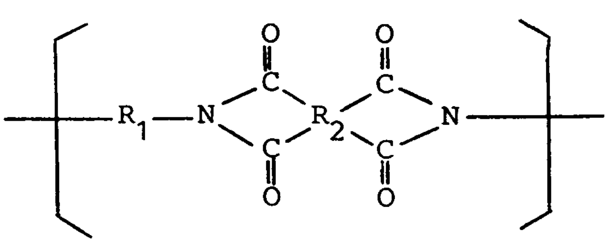

(IX)

wherein $R_1$ and $R_2$ are each groups selected from the group consisting of an aliphatic group, an alicyclic group, a monocyclic aromatic group, a fused polycyclic aromatic group and a polycyclic aromatic group wherein the aromatic rings are joined by a member selected from the group consisting of a direct bond and a bridge member, wherein $R_1$ is a divalent group and $R_2$ is a tetravalent group with the proviso that $R_1$ is not the radical of 4,4'-bis(3-aminophenoxy)-biphenyl and $R_2$ is not the radical of pyromelittic dianhydride.

**14.** A polyimide according to Claim 13, wherein said polyimide is non-crystalline.

**15.** A polyimide according to Claim 13, wherein said polyimide is crystalline and comprises at least 85% by mole of the recurring structural unit of the formula (VI) and from 0.5 to 15% by mole of at least one recurring structural unit selected from the group consisting of recurring structural units of the formula (VII), formula (VIII) and the formula (IX).

**16.** A process for controlling the rate of crystallization in the preparation of a crystalline polyimide from a non-crystalline polyimide comprising carrying out condensation of 4,4'-bis(3-aminophenoxy)-biphenyl of the formula (I):

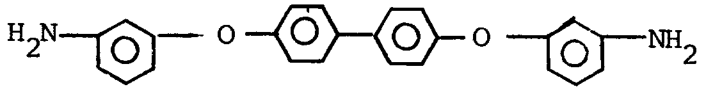

(I)

with pyromellitic dianhydride of the formula (II):

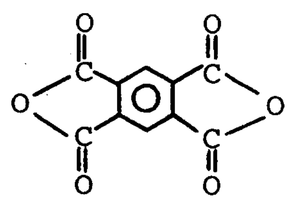

(II)

in the presence of at least one co-reactant selected from the group consisting of diamine compound represented by the formula (III):

$H_2N - R_1 - NH_2$ (III)

wherein $R_1$ is a divalent group selected from the group consisting of an aliphatic group, an alicyclic group, a monocyclic aromatic group, a fused polycyclic aromatic group and a polycyclic aromatic group in which the aromatic rings are joined by a member selected from the group consisting of a direct bond and a bridge member, with the proviso that the diamine compound of formula (III) is not the biphenyl compound of formula (I); and a tetracarboxylic acid dianhydride represented by the formula (IV):

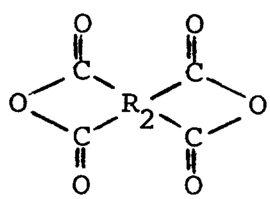

(IV)

wherein $R_2$ is a tetravalent group selected from the group consisting of an aliphatic group, an alicyclic group, a monocyclic aromatic group, a fused polycyclic aromatic group and a polycyclic aromatic group in which the aromatic rings are joined by a member selected from the group consisting of a direct bond and a bridge member, with the proviso that the dianhydride of formula (IV) is not

pyromellitic dianhydride of formula (II); and wherein

(a) when said at least one co-reactant is selected only from said diamine compounds of formula (III) then said co-reactant is present in amount of from 1-30% by mole per mole of said biphenyl compound of formula (I);

(b) when said at least one co-reactant is selected only from said dianhydride compounds of formula (IV) then said co-reactant is present in amount of from 1-30% by mole per mole of said pyromellitic dianhydride of formula (II); and

(c) when said at least one co-reactant is selected both from said diamine compounds of formula (III) and from said dianhydride compounds of formula (IV) then said co-reactant is present in amount of 1-30% by mole per total mole of said biphenyl compound of formula (I) and said pyromellitic dianhydride of formula (II).

**Patentansprüche**

1. Verfahren zur Herstellung eines Polyimids einschließlich der Kondensation von 4,4'-bis(3-aminophenoxy)biphenyl mit der Formel (I):

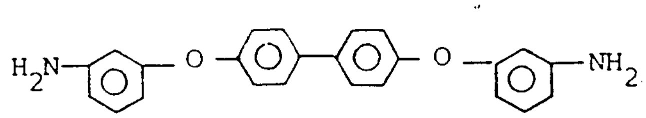

(I)

mit einem Pyromellith-Dianhydrid mit der Formel (II):

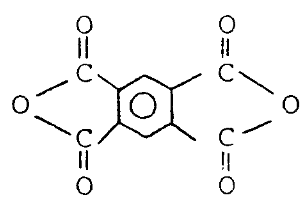

(II)

bei Vorhandensein von zumindest einem weiteren Reaktionsmittel, das ausgewählt wurde aus der Gruppe, die aus einer Diaminverbindung mit der folgenden Formel besteht (III):

$H_2N - R_1 - NH_2$ (III)

worin $R_1$ eine zweiwertige Gruppe ist, die aus der Gruppe ausgewählt wurde, die aus einer aliphatischen Gruppe, einer alizyklischen Gruppe, einer monozyklischen aromatischen Gruppe, einer geschmolzenen polyzyklischen aromatischen Gruppe und einer polyzyklischen aromatischen Gruppe besteht, in der die aromatischen Ringe durch ein Glied verbunden sind, das aus der Gruppe ausgewählt wurde, die aus einer direkten Bindung und einem Brückenglied besteht, mit der Maßgabe, daß die Diaminverbindung mit der Formel (III) nicht die Biphenylverbindung mit der Formel (I) ist; und ein Tetracarbonsäure-Dianhydrid mit der Formel (IV):

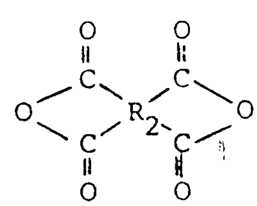

(IV)

worin $R_2$ eine vierwertige Gruppe ist, die aus der Gruppe ausgewählt wurde, die aus einer aliphatischen Gruppe, einer alizyklischen Gruppe, einer monozyklischen aromatischen Gruppe, einer geschmolzenen polyzyklischen aromatischen Gruppe und einer polyzyklischen aromatischen Gruppe besteht, in der die aromatischen Ringe durch ein Glied verbunden sind, das aus der Gruppe ausgewählt wurde, die aus

einer direkten Bindung und einem Brückenglied besteht, mit der Maßgabe, daß das Dianhydrid mit der Formel (IV) kein Pyromellith-Dianhydrid der Formel (II) ist, dadurch gekennzeichnet, daß:

(a) wenn zumindest ein weiteres Reaktionsmittel nur aus den Diaminverbindungen mit der Formel (III) ausgewählt wird, das weitere Reaktionsmittel in einer Menge von 1-100 mol% pro mol der Biphenylverbindung mit der Formel (I) vorhanden ist;

(b) wenn zumindest ein weiteres Reaktionsmittel nur aus den Dianhydridverbindungen mit der Formel (IV) ausgewählt wird, das weitere Reaktionsmittel in einer Menge von 1-100 mol% pro mol des Pyromellith-Dianhydrids mit der Formel (II) vorhanden ist; und

(c) wenn zumindest ein weiteres Reaktionsmittel sowohl aus den Diaminverbindungen mit der Formel (III) als auch aus den Dianhydridverbindungen mit der Formel (IV) ausgewählt wird, das weitere Reaktionsmittel in einer Menge von 1-100 mol% pro Gesamtmol der Biphenylverbindung mit der Formel (I) und dem Pyromellith-Dianhydrid mit der Formel (II) vorhanden ist.

**2.** Verfahren nach Anspruch 1, dadurch gekennzeichnet, daß die Kondensation derart ausgeführt wird, daß ein nichtkristallines Polyimid entsteht.

**3.** Verfahren nach Anspruch 1, dadurch gekennzeichnet, daß die mol-Prozentsätze des weiteren Reaktionsmittels in jedem Fall 1 bis 30 mol% des weiteren Reaktionsmittels pro mol des 4,4'-bis(3-aminophenoxy)biphenyls mit der Formel (I) und/oder des Pyromellith-Dianhydrids mit der Formel (II) betragen, und daß die Kondensation derart ausgeführt wird, daß ein kristallines Polyimid entsteht.

**4.** Verfahren nach einem der obigen Ansprüche, dadurch gekennzeichnet, daß die Diaminverbindung mit der Formel (III) eine Verbindung ist, worin $R_1$ eine polyzyklische aromatische Gruppe ist, in der die aromatischen Ringe durch ein Glied verbunden sind, das aus der Gruppe ausgewählt wurde, die aus einer direkten Bindung und einem Brückenglied besteht.

**5.** Verfahren nach Anspruch 4, dadurch gekennzeichnet, daß die Diaminverbindung mit der Formel (III) ein bis(4-aminophenyl)ether ist.

**6.** Verfahren nach einem der obigen Ansprüche, dadurch gekennzeichnet, daß das Tetracarbonsäure-Dianhydrid mit der Formel (IV) eine Verbindung ist, worin $R_2$ eine polyzyklische aromatische Gruppe ist, in der die aromatischen Ringe durch ein Glied verbunden sind, das aus der Gruppe ausgewählt wurde, die aus einer direkten Bindung und einem Brückenglied besteht.

**7.** Verfahren nach Anspruch 6, dadurch gekennzeichnet, daß das Tetracarbonsäure-Dianhydrid mit der Formel (IV) ein 3,3',4,4'-biphenyltretracarbon-Anhydrid ist.

**8.** Verfahren nach Anspruch 2, dadurch gekennzeichnet, daß das Diamin mit der Formel (III) ein bis(4-aminophenyl)ether ist und daß zumindest eine Diaminverbindung der Formel (III) und das Tetracarbonsäure-Dianhydrid der Formel (IV) in einer Menge von 2 bis 30 mol% von zumindest einem des genannten 4,4-bis(3-aminophenoxy)biphenyls und Pyromellith-Dianhydrids vorhanden ist.

**9.** Verfahren nach einem der obigen Ansprüche, dadurch gekennzeichnet, daß weiterhin ein Dicarbonsäure-Anhydrid enthalten ist.

**10.** Verfahren nach Anspruch 9, dadurch gekennzeichnet, daß das Dicarbonsäure-Anhydridin einer Menge von 0,001 bis 1,0 mol pro Gesamtmol des 4,4-bis (3-aminophenoxy)biphenyls der Formel (I) und der Diaminverbindung der Formel (III) vorhanden ist.

**11.** Verfahren nach Anspruch 9 oder 10, dadurch gekennzeichnet, daß das Dicarbonsäure-Anhydrid ein Phthalsäureanhydrid ist.

**12.** Polyimid, das durch ein Verfahren nach einem der obigen Ansprüche hergestellt wird.

**13.** Polyimid mit zwei oder mehr periodisch wiederkehrenden Grundeinheiten gemäß der nachstehenden Formel (V):

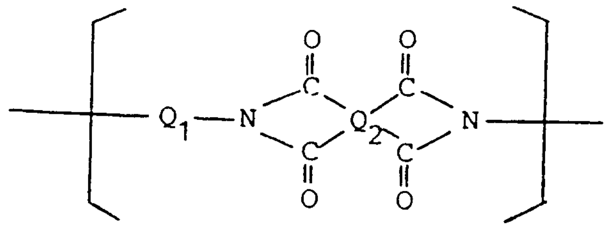

(V)

worin $Q_1$ und $Q_2$ jeweils Gruppen sind, die aus der Gruppe ausgewählt wurden, die aus einer aliphatischen Gruppe, einer alizyklischen Gruppe, einer monozyklischen aromatischen Gruppe, einer geschmolzenen polyzyklischen aromatischen Gruppe und einer polyzyklischen aromatischen Gruppe besteht, worin die aromatischen Gruppen durch ein Glied verbunden sind, das aus der Gruppe ausgewählt wurde, die aus einer direkten Bindung und einem Brückenglied besteht, worin $Q_1$ eine zweiwenige Gruppe und $Q_2$ eine vierwertige Gruppe ist, wobei die periodisch wiederkehrenden Grundeinheiten der Formel (V) 50 mol% oder mehr der periodisch wiederkehrenden Grundeinheiten mit der Formel (VI) aufweisen:

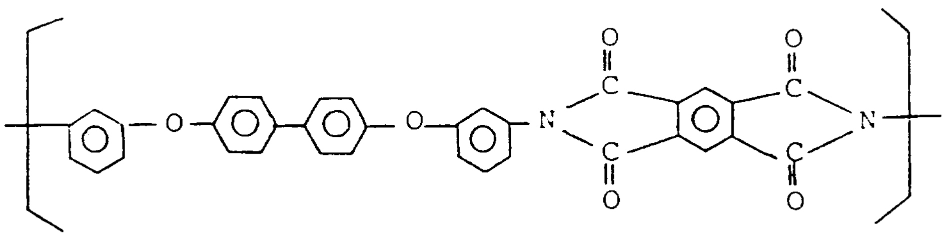

(VI)

und zwischen 0,5 und 50 mol% von zumindest einer periodisch wiederkehrenden Grundeinheit, die aus der Gruppe der periodisch wiederkehrenden Grundeinheiten mit der Formel (VII), der Formel (VIII) und der Formel (IX) ausgewählt wurde:

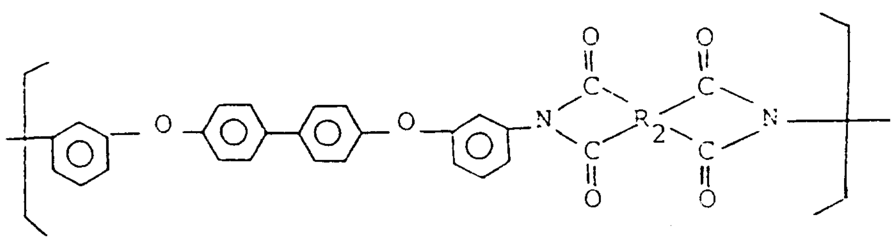

(VII)

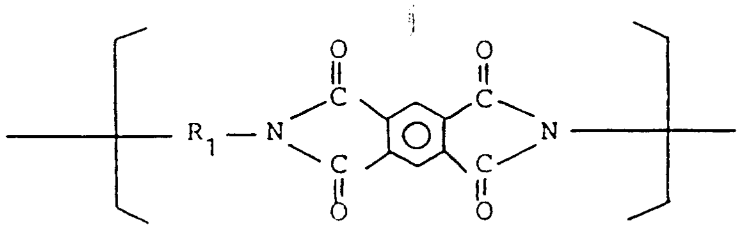

(VIII)

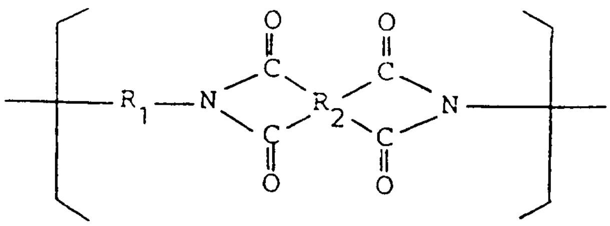

(IX)

worin $R_1$ und $R_2$ jeweils Gruppen sind die aus der Gruppe ausgewählt wurden, die aus einer aliphatischen Gruppe, einer alizyklischen Gruppe, einer monozyklischen aromatischen Gruppe, einer geschmolzenen polyzyklischen aromatischen Gruppe und einer polyzyklischen aromatischen Gruppe besteht, worin die aromatischen Ringe durch ein Glied verbunden sind, das aus der Gruppe ausgewählt wurde, die aus einer direkten Bindung und einem Brückenglied besteht, worin $R_1$ eine zweiwertige Gruppe und $R_2$ eine vierwertige Gruppe ist, mit der Maßgabe, daß $R_1$ nicht das Radikal von 4,4'-bis(3-aminophenoxy)-biphenyl ist und $R_2$ nicht das Radikal des Pyromellith-Dianhydrids ist.

**14.** Polyimid nach Anspruch 13, dadurch gekennzeichnet, daß das Polyimid nichtkristallin ist.

**15.** Polyimid nach Anspruch 13, dadurch gekennzeichnet, daß das Polyimid kristallin ist und zumindest 85 mol% der periodisch wiederkehrenden Grundeinheit mit der Formel (VI) und zwischen 0,5 und 15 mol% von zumindest einer periodisch wiederkehrenden Grundeinheit aufweist, die aus der Gruppe ausgewählt wurde, die aus den periodisch wiederkehrenden Grundeinheiten der Formel (VII), der Formel (VIII) und der Formel (IX) besteht.

**16.** Verfahren zur Steuerung der Kristallisierungsgeschwindigkeit bei der Herstellung eines kristallinen Polyimids aus einem nichtkristallinen Polyimid einschließlich der Kondensation von 4,4'-bis(3-aminophenoxy)biphenyl mit der Formel (I):

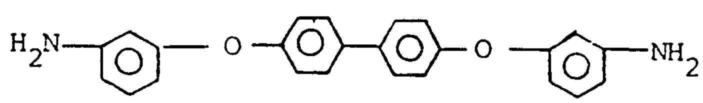

**(I)**

mit einen, Pyromellith-Dianhydrid mit der Formel (II):

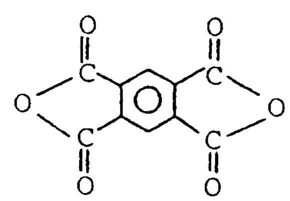

(II)

bei Vorhandensein von zumindest einem weiteren Reaktionsmittel, das ausgewählt wurde aus der Gruppe, die aus einer Diaminverbindung mit der folgenden Formel besteht (III):

$H_2N - R_1 - NH_2$ (III)

worin $R_1$ eine zweiwertige Gruppe ist, die aus der Gruppe ausgewählt wurde, die aus einer aliphatischen Gruppe, einer alizyklischen Gruppe, einer monozyklischen aromatischen Gruppe, einer geschmolzenen polzyklischen aromatischen Gruppe und einer polyzyklischen aromatischen Gruppe besteht, in der die aromatischen Ringe durch ein Glied verbunden sind, das aus der Gruppe ausgewählt wurde, die aus einer direkten Bindung und einem Brückenglied besteht, mit der Maßgabe, daß die Diaminverbindung mit der Formel (III) nicht die Biphenylverbindung mit der Formel (I) ist; und ein Tetracarbonsäure-Dianhydrid mit der Formel (IV):

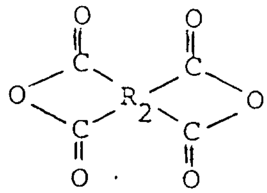

(IV)

worin $R_2$ eine vierwertige Gruppe ist, die aus der Gruppe ausgewählt wurde, die aus einer aliphatischen Gruppe, einer alizyklischen Gruppe, einer monozyklischen aromatischen Gruppe, einer geschmolzenen polyzyklischen aromatischen Gruppe und einer polyzyklischen aromatischen Gruppe besteht, in der die aromatischen Ringe durch ein Glied verbunden sind, das aus der Gruppe ausgewählt wurde, die aus einer direkten Bindung und einem Brückenglied besteht, mit der Maßgabe, daß das Dianhydrid mit der Formel (IV) kein Pyromellith-Dianhydrid der Formel (II) ist, dadurch gekennzeichnet, daß:

(a) wenn zumindest ein weiteres Reaktionsmittel nur aus den Diaminverbindungen mit der Formel (III) ausgewählt wird, das weitere Reaktionsmittel in einer Menge von 1-30 mol% pro mol der Biphenylverbindung mit der Formel (I) vorhanden ist;

(b) wenn zumindest ein weiteres Reaktionsmittel nur aus den Dianhydridverbindungen mit der Formel (IV) ausgewählt wird, das weitere Reaktionsmittel in einer Menge von 1-30 mol% pro mol des Pyromellith-Dianhydrids mit der Formel (II) vorhanden ist; und

(c) wenn zumindest ein weiteres Reaktionsmittel sowohl aus den Diaminverbindungen mit der Formel (III) als auch aus den Dianhydridverbindungen mit der Formel (IV) ausgewählt wird, das weitere Reaktionsmittel in einer Menge von 1-30 mol% pro Gesamtmol der Biphenylverbindung mit der Formel (I) und dem Pyromellith-Dianhydrid mit der Formel (II) vorhanden ist.

**Revendications**

**1.** Procédé pour préparer un polyimide comprenant la réalisation de la condensation de 4,4'-bis(3-aminophénoxy)biphényl de la formule (I):

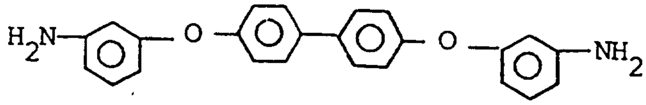

(I)

avec un dianhydride pyromellitique de la formule (II)

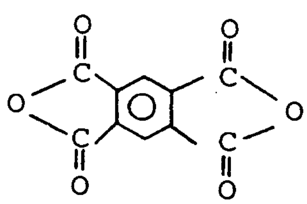

(II)

en la présence d'au moins un co-réactif choisi dans le groupe constitué par un composé de diamine représenté par la formule (III):

$H_2N - R_1 - NH_2$ (III)

où $R_1$ est un groupe divalent choisi dans le groupe consistant en un groupe aliphatique, un groupe alicyclique, un groupe aromatique monocyclique, un groupe aromatique polycyclique fusionné et un groupe aromatique polycyclique dans lequel les cycles aromatiques sont reliés par un élément choisi dans le groupe consistant en une liaison directe et un élément formant pont, à la condition que la composé de diamine de formule (III) ne soit pas le composé de biphényle de formule (I); et un dianhydride d'acide tétracarboxylique de formule (IV)

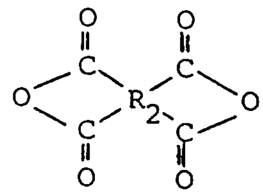

(IV)

où $R_2$ est un groupe tétravalent choisi dans le groupe consistant en un groupe aliphatique, un groupe alicyclique, un groupe aromatique monocyclique, un groupe aromatique polycyclique fusionné et un groupe aromatique polycyclique, dans lequel les cycles aromatiques sont reliés par un élément choisi dans le groupe consistant en une liaison directe et un élément formant pont, à la condition que le dianhydride de formule (IV) ne soit pas le dianhydride pyromellitique de la formule (II); et dans lequel:

(a) quand ledit au moins un co-réactif est choisi seulement parmi lesdits composés de diamine de formule (III), ledit co-réactif est alors présent selon une quantité comprise entre 1 et 100% par mole par mole dudit composé de biphényle de formule (I);

(b) quand ledit au moins un co-réactif est choisi seulement parmi lesdits composés de dianhydride de formule (IV), ledit co-réactif est alors présent selon une quantité comprise entre 1 et 100% par mole par mole dudit composé de dianydride pyromellitique de formule (II); et

(c) quand ledit au moins un co-réactif est choisi à la fois parmi lesdits composés de diamine de formule (III) et lesdits composés de dianhydride de formule (IV), ledit co-réactif est alors présent selon une quantité comprise entre 1 et 100% par mole par mole totale dudit composé de biphényle de formule (I) et dudit dianhydride pyromellitique de la formule (II).

**2.** Procédé selon la revendication 1, dans lequel ladite condensation a lieu de manière à former un polyimide non cristallin.

**3.** Procédé selon la revendication 1, dans lequel lesdits pourcentages molaires du co-réactif sont compris, dans chaque cas, entre 1 et 30% par mole de co-réactif par mole dudit 4,4'-bis(3-aminophénoxy)-biphényle de formule (I) et/ou dudit dianhydride pyromellitique de formule (II); et dans lequel ladite compensation est réalisée de façon à former un polyimide cristallin.

**4.** Procédé selon l'une quelconque des revendications précédentes, dans lequel ledit composé de diamine de formule (III) est un composé dans lequel $R_1$ est un groupe aromatique polycyclique dans lequel les cycles aromatiques sont reliés par un élément choisi dans le groupe consistant en une liaison directe et un élément formant pont.

**5.** Procédé selon la revendication 4, dans lequel ledit composé de diamine de formule (III) est du bis(4-aminophényl)éther.

**6.** Procédé selon l'une quelconque des revendications précédentes, dans lequel ledit dianhydride d'acide tétracarboxylique de formule (IV) est un composé dans lequel $R_2$ est un groupe aromatique polycyclique dans lequel les cycles aromatiques sont reliés par un élément choisi dans le groupe consistant en une liaison directe et un élément formant pont.

**7.** Procédé selon la revendication 6, dans lequel ledit dianhydride d'acide tétracarboxylique de formule (IV) est l'anhydride de 3,3',4,4'-biphényltétracarboxylique.

**8.** Procédé selon la revendication 2, dans lequel ladite diamine de formule (III) est du bis(4-aminophényl)-éther, et dans lequel l'un au moins desdits composé de diamine de formule (III) et dudit dianhydride d'acide tétracarboxylique de formule (IV) est présent selon une quantité comprise entre 2% et 30% par mole d'au moins l'un dudit 4,4-bis(3-aminophénoxy)biphényle et dudit dianhydride pyromellitique.

**9.** Procédé selon l'une quelconque des revendications précédentes, comprenant en outre un anhydride d'acide dicarboxylique.

**10.** Procédé selon la revendication 9, dans lequel ledit anhydride d'acide dicarboxylique est présent selon une quantité comprise entre 0,001 à 1,0 mole par moles totales dudit 4,4'-bis(3-aminophénoxy)-

biphényle de formule (I) et dudit composé de diamine de formule (III).

**11.** Procédé selon la revendication 9 ou la revendication 10, dans lequel ledit anhydride d'acide dicarboxylique est de l'anhydride phtalique.

**12.** Polyimide préparé par un procédé selon l'une quelconque des revendications précédentes.

**13.** Polyimide comprenant deux ou plusieurs unités structurelles récurrentes représentées par la formule (V):

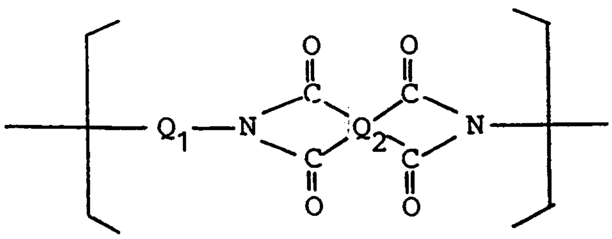

(V)

où $Q_1$ et $Q_2$ sont chacun des groupes choisi parmi le groupe consistant en un groupe aliphatique, un groupe alicyclique, un groupe aromatique monocyclique, un groupe aromatique polycyclique fusionné et un groupe aromatique polycyclique, et un groupe aromatique polycyclique dans lequel les groupes aromatiques sont reliés par un élément choisi dans le groupe consistant en une liaison directe et un élément formant pont, $Q_1$ est un groupe divalent et $Q_2$ est un groupe tétravalent; lesdites unités structurelles récurrentes de la formule (V) comprenant 50% par mole ou plus des unités structurelles récurrentes dont la formule est (VI)

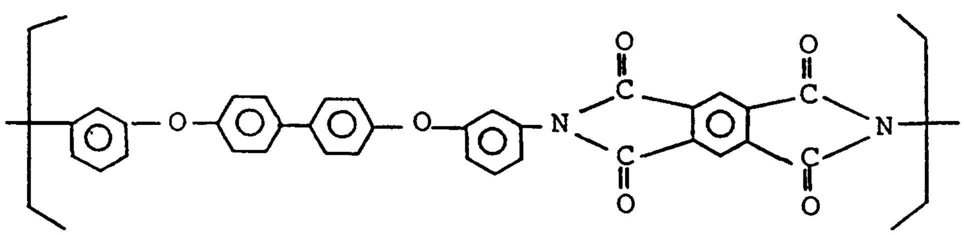

(VI)

et de 0,5 à 50% par mole d'au moins une unité structurelle récurrente sélectionnée parmi le groupe d'unités structurelles récurrentes de la formule (VII), de la formule (VIII) et de la formule (IX)

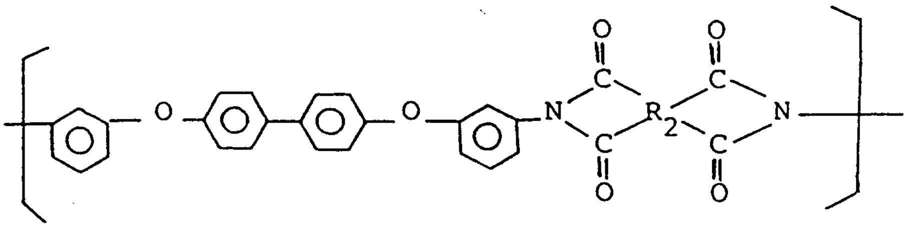

(VII)

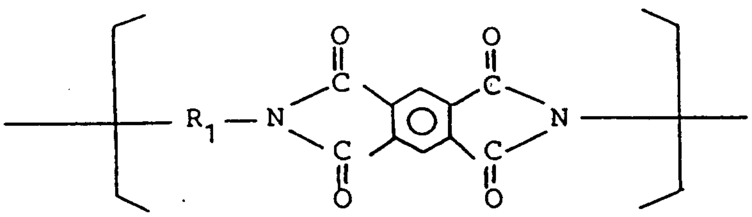

(VIII)

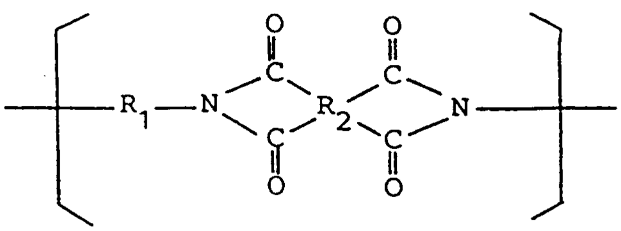

(IX)

où $R_1$ et $R_2$ sont chacun des groupes choisis parmi le groupe consistant en un groupe aliphatique, un groupe alicyclique, un groupe aromatique monocyclique, un groupe aromatique polycyclique fusionné et un groupe aromatique polycyclique dans lequel les cycles aromatiques sont reliés par un élément choisi dans le groupe consistant en une liaison directe et un élément formant pont, où $R_1$ est un groupe divalent et $R_2$ est un groupe tétravalent, à condition que $R_1$ ne soit pas le radical de 4,4'-bis(3-aminophénoxy)-biphényle et que $R_2$ ne soit pas le radical du dianhydride pyromellitique.

**14.** Polyimide selon la revendication 13, dans lequel ledit polyimide est non cristallin.

**15.** Polyimide selon la revendication 13, dans lequel ledit polyimide est cristallin et comprend au moins 85% par mole de l'unité structurelle récurrente de la formule (VI) et de 0,5 à 15% par mole d'au moins une unité structurelle récurrente choisie dans le groupe consistant en les unités structurelles récurrentes de la formule (VII), de la formule (VIII) et de la formule (IX).

**16.** Procédé pour commander le taux de cristallisation pendant la préparation d'un polyimide cristallin à partir d'un polyimide non cristallin comprenant le réalisation de la condensation de 4,4'-bis(3-aminophénoxy)-biphényle de la formule (I):

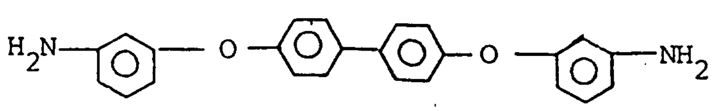

(I)

avec un dianhydride pyromellitique de la formule (II)

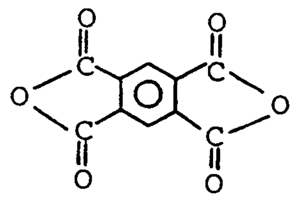

(II)

en la présence d'au moins un co-réactif choisi dans le groupe constitué par un composé de diamine représenté par la formule (III):

$H_2N - R_1 - NH_2$ (III)

où $R_1$ est un groupe divalent choisi dans le groupe consistant en un groupe aliphatique, un groupe alicyclique, un groupe aromatique monocyclique, un groupe aromatique polycyclique fusionné et un groupe aromatique polycyclique dans lequel les cycles aromatiques sont reliés par un élément choisi dans le groupe consistant en une liaison directe et un élément formant pont, à la condition que la composé de diamine de formule (III) ne soit pas le composé de biphényle de formule (I); et un dianydride d'acide tétracarboxylique de formule (IV)

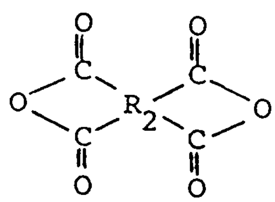

(IV)

où $R_2$ est un groupe tétravalent choisi dans le groupe consistant en un groupe aliphatique, un groupe alicyclique, un groupe aromatique monocyclique, un groupe aromatique polycyclique fusionné et un groupe aromatique polycyclique dans lequel les cycles aromatiques sont reliés par un élément choisi dans le groupe consistant en une liaison directe et un élément formant pont, à la condition que le dianhydride de formule (IV) ne soit pas le dianhydride pyromellitique de formule (II); et dans lequel:

(a) quand ledit au moins un co-réactif est choisi seulement parmi lesdits composés de diamine de formule (III), ledit co-réactif est alors présent selon une quantité comprise entre 1 et 30% par mole par mole dudit composé de biphényle de formule (I);

(b) quand ledit au moins un co-réactif est choisi seulement parmi lesdits composés de dianhydride de formule (IV), ledit co-réactif est alors présent selon une quantité comprise entre 1 et 30% par mole par mole dudit composé de dianydride pyromellitique de formule (II); et

(c) quand ledit au moins un co-réactif est choisi à la fois parmi lesdits composés de diamine de formule (III) et lesdits composés de dianhydride de formule (IV), ledit co-réactif est alors présent selon une quantité comprise entre 1 et 30% par mole par mole totale dudit composé de biphényle de formule (I) et dudit dianhydride pyromellitique de formule (II).

FIG.1

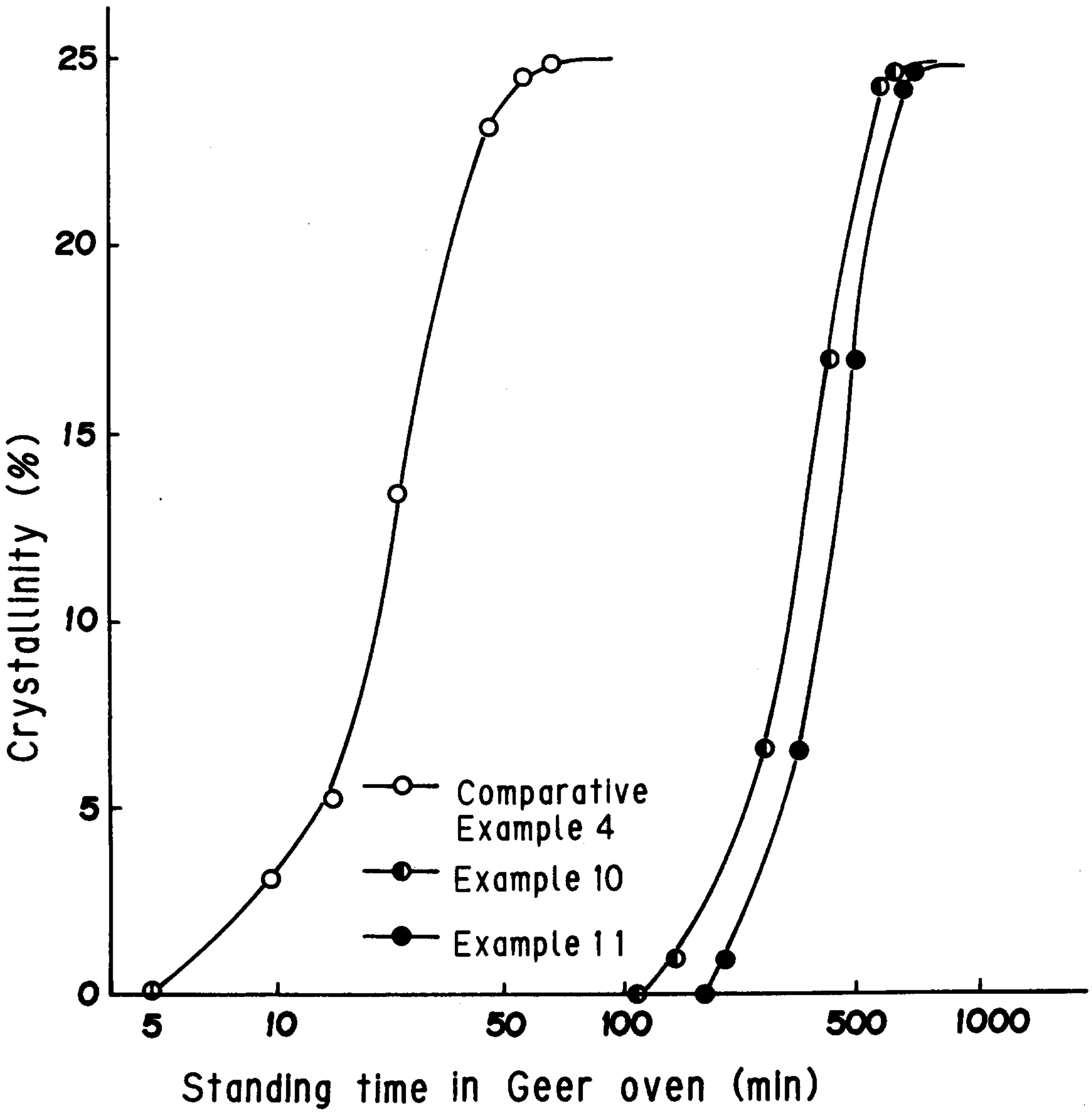
Crystallinity (%)
25
20
15
10
5
0
Comparative Example 4
Example 10
Example 1 1
5
10
50
100
500
1000
Standing time in Geer oven (min)

FIG. 2

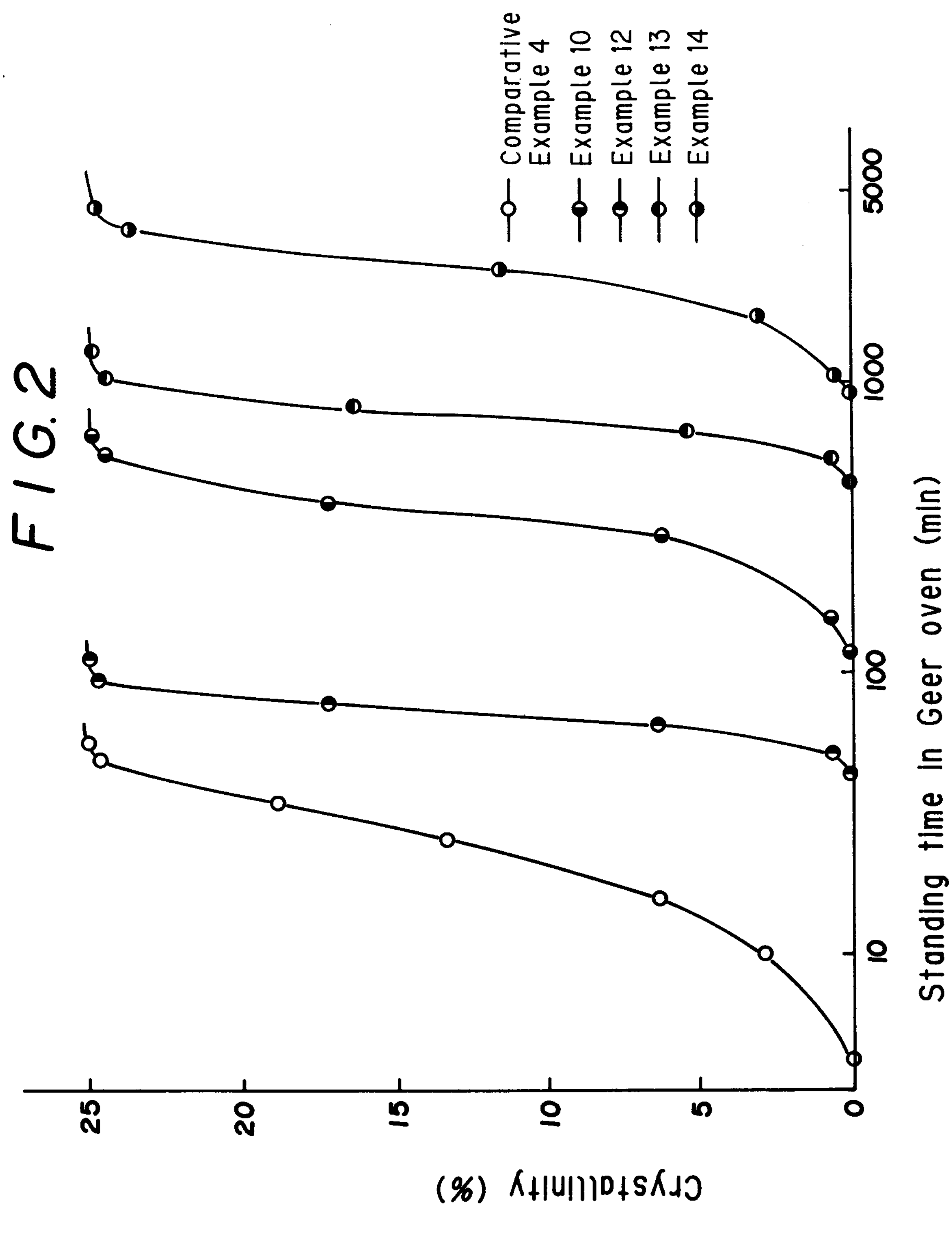
Crystallinity (%)
0
5
10
15
20
25
10
100
1000
5000
Standing time in Geer oven (min)
Comparative Example 4
Example 10
Example 12
Example 13
Example 14

FIG. 3

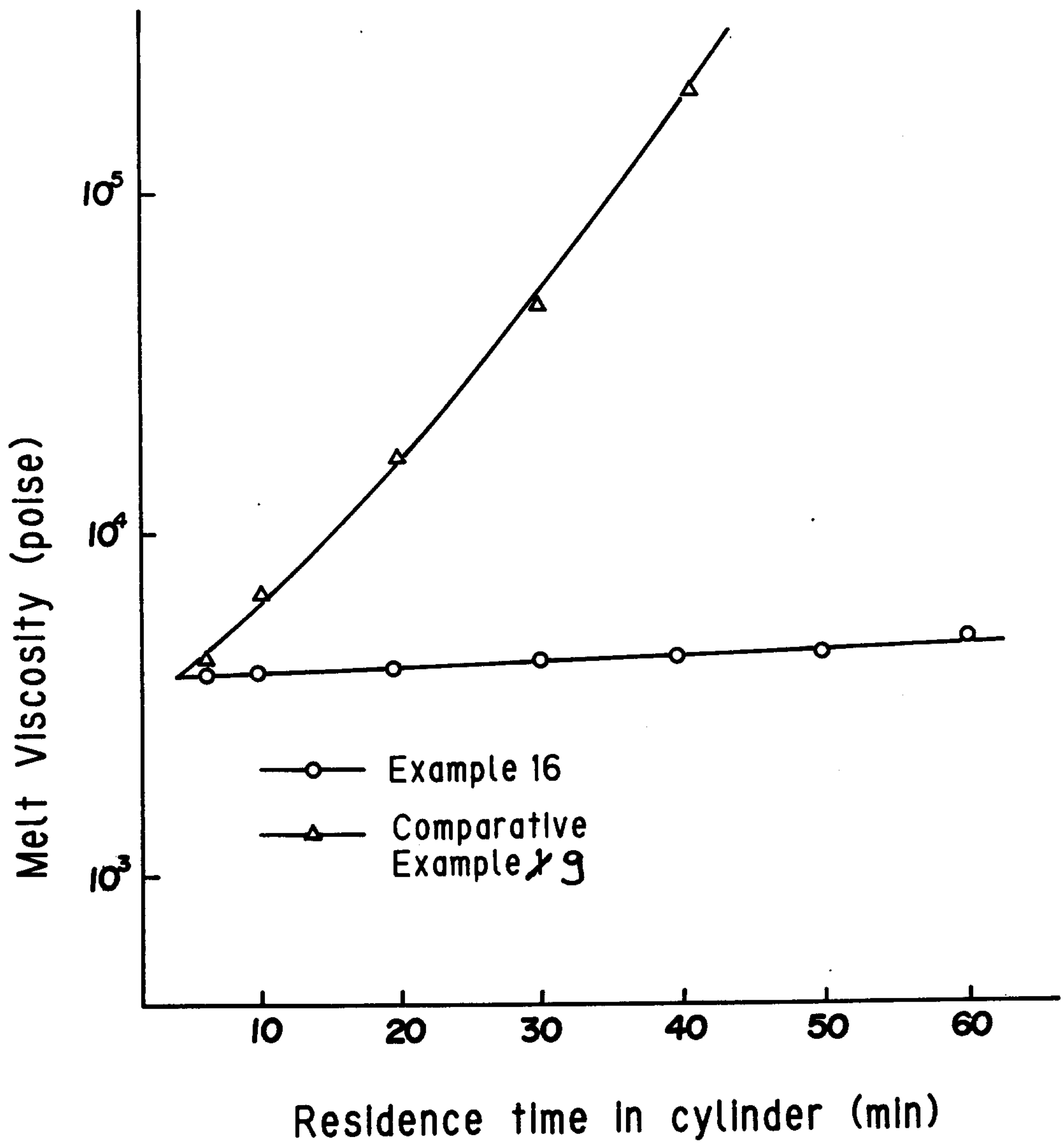

$10^5$
$10^4$
$10^3$
Melt Viscosity (poise)
10
20
30
40
50
60
Residence time in cylinder (min)
Example 16
Comparative
Example 9